(19) Europäisches Patentamt
European Patent Office
Office européen des brevets

(11) **EP 2 590 137 B1**

(12) **FASCICULE DE BREVET EUROPEEN**

(45) Date de publication et mention
de la délivrance du brevet:
**19.03.2014 Bulletin 2014/12**

(51) Int Cl.:
***G06T 5/00*** *(2006.01)*

(21) Numéro de dépôt: **12191112.7**

(22) Date de dépôt: **02.11.2012**

(54) **Procède et dispositif pour optimiser la quantité d'information contenue dans une image traitée**

Verfahren und Vorrichtung zum Optimieren der Informationsmenge, die in einem verarbeiteten Bild enthalten ist

Method and device for optimising the amount of information contained in a processed image

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2011 FR 1159974**

(43) Date de publication de la demande:
**08.05.2013 Bulletin 2013/19**

(73) Titulaire: **IMRA Europe S.A.S.**
**06904 Sophia Antipolis Cedex (FR)**

(72) Inventeur: **Bougnoux, Sylvain**
**06220 Vallauris (FR)**

(74) Mandataire: **Vigand, Philippe et al**
**Novagraaf International SA**
**Chemin de l'Echo 3**
**1213 Onex (CH)**

(56) Documents cités:
**EP-A1- 2 381 673     EP-A2- 2 068 280**

• **LEE H S ET AL: "Implementation of 3D undistorting algorithm for stereo camera", INTELLIGENT DATA ACQUISITION AND ADVANCED COMPUTING SYSTEMS: TECHNOLOGY AND APPLICATIONS, 2009. IDAACS 2009. IEEE INTERNATIONAL WORKSHOP ON, IEEE, PISCATAWAY, NJ, USA, 21 septembre 2009 (2009-09-21), pages 414-419, XP031572331, ISBN: 978-1-4244-4901-9**

**EP 2 590 137 B1**

**Description**

La présente invention est relative à un procédé de traitement d'image. En particulier, la présente invention est relative à un procédé pour optimiser la quantité d'information contenue dans une image traitée, l'image traitée étant fournie pour être utilisée dans un système de vision artificielle, le procédé comprenant les étapes de :

- obtenir une image $I_1$ à partir d'un dispositif d'acquisition d'image, l'image $I_1$ incluant un premier axe de coordonnées x et un second axe de coordonnées y,
- obtenir une image supplémentaire $I_2$ à partir d'un dispositif d'acquisition d'image supplémentaire, l'image supplémentaire $I_2$ incluant un premier axe de coordonnées x et un second axe de coordonnées y,
- supprimer une distorsion dans l'image $I_1$, et
- supprimer une distorsion dans l'image supplémentaire $I_2$. L'image formée par une lentille optique inclut une distorsion venant des défauts optiques de la lentille qui se traduit souvent par une courbure des lignes droites de l'objet de l'image. Cette distorsion est présente dans des images formées par toutes les lentilles optiques et elle est la plus sévère pour les lentilles optiques grand angle. Par exemple, la Figure 6 de la demande de brevet US2010/0091090 (PCT/JP2007/068468) montre une image formée par une lentille grand angle et dans laquelle une telle distorsion est facilement visible.

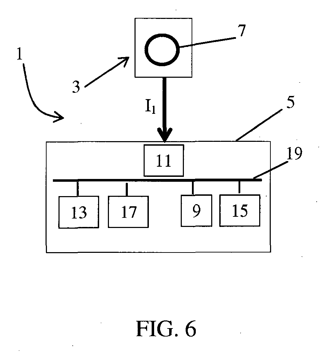

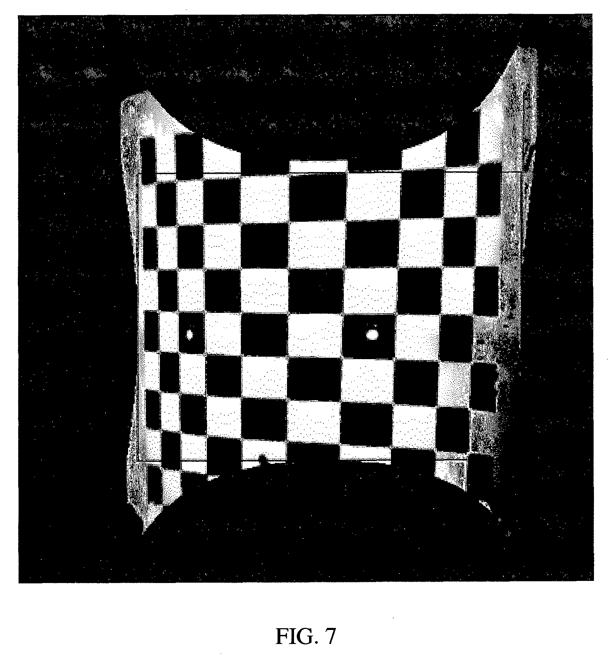

La Figure 7 de cette demande de brevet US2010/0091090 (PCT/JP2007/068468) montre l'image résultant d'un traitement appliqué à l'image de la Figure 6 pour supprimer la distorsion dans l'image. L'image résultant de la Figure 7 a une partie centrale qui est excessivement réduite et des bords qui sont excessivement élargies.

Les traitements d'image (ou les transformations) appliqués à une image pour supprimer la distorsion détruisent l'information présente dans l'image originale car la distribution des pixels (éléments d'image) dans l'image est sévèrement modifiée par un tel traitement.

Le procédé décrit dans la demande de brevet US2010/0091090 emploie une projection cylindrique permettant de redistribuer les pixels uniformément. Toutefois, la distribution initiale n'est plus préservée. La demande de brevet US2010/0208034 traite ce problème par l'omission de la suppression de distorsion et en conséquence l'utilisation de ces images est très difficile car le processus de corrélation nécessite des calculs extrêmement lourds et coûteux.

Une image prise avec une lentille grand angle est montrée sur la Figure 1 et cette image traitée pour supprimer la distorsion dans l'image, par application d'une transformation classique de suppression de la distorsion, est montrée sur la Figure 2. Cette transformation classique envoie les pixels du bord de l'image vers l'infini (dans le cas d'un angle de 180°). Une telle transformation classique ne permet pas de conserver la résolution de l'image originale. Ceci est illustré sur les Figures 3 et 4.

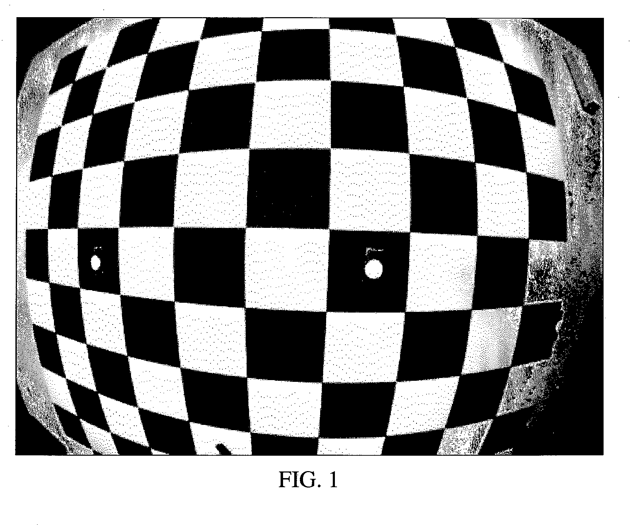

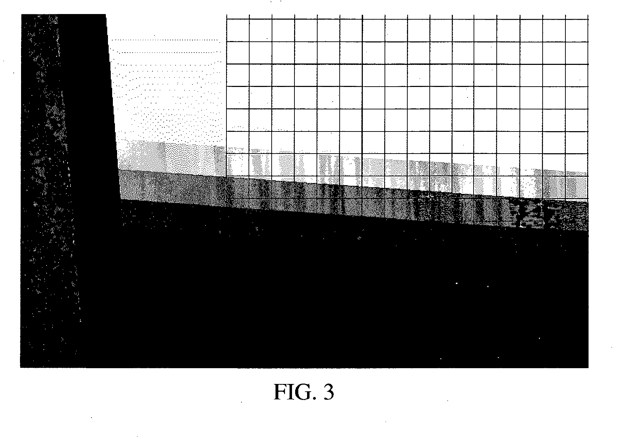

La Figure 3 montre un bord vertical de l'image originale (Figure 1) et une grille ayant une pluralité de carrés. Chaque carré représente un pixel (élément d'image) de l'image sans distorsion. Un pixel de l'image originale (illustré en niveaux de gris) se trouve étalé dans deux pixels de l'image sans distorsion (deux carrés de la grille). Par conséquent, les pixels de l'image sans distorsion comprennent moins d'information.

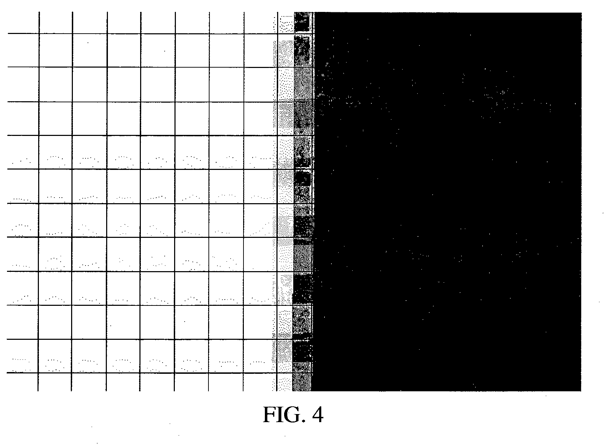

De plus, au centre de l'image, qui est montré dans la Figure 4, deux pixels de l'image originale sont pressés dans un pixel de l'image sans distorsion (un carré de la grille). Par conséquent, ces pixels de l'image sans distorsion comprennent trop d'information et l'information dans le pixel de l'image sans distorsion n'est plus utilisable dans des opérations de traitement et d'analyses ultérieurs.

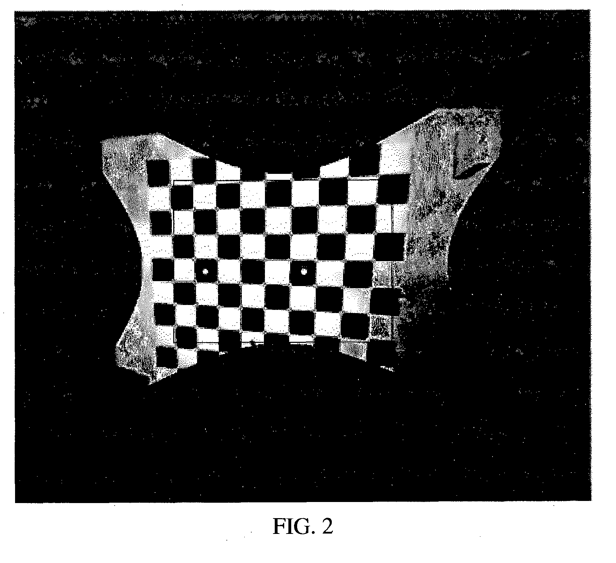

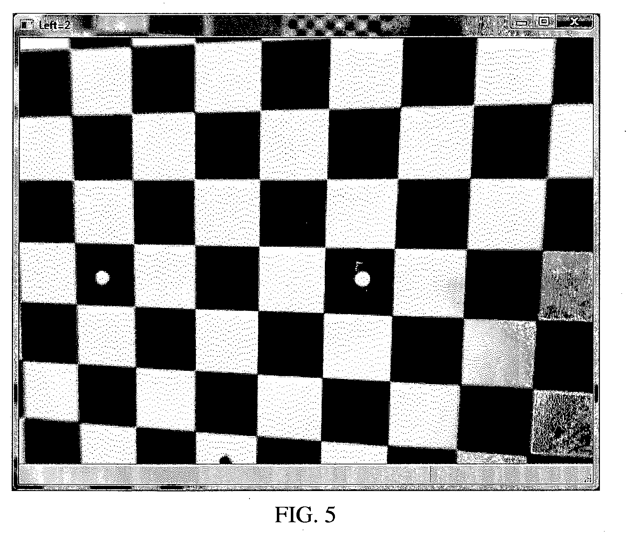

En outre, une fois que l'image est traitée pour supprimer la distorsion, la portion encadrée dans la Figure 2 par un rectangle correspondant au format de l'image à être affiché ou utilisé est extraite de l'image sans distorsion. La Figure 5 montre la portion extraite et retenue de l'image sans distorsion. Il en résulte que l'information contenue sur les bords de l'image sans distorsion et en dehors du rectangle correspondant au format de l'image à être affiché ou utilisé est perdue et n'est plus disponible pour des opérations de traitement et d'analyses ultérieurs.

De plus, seulement une partie de l'information dans le champ angulaire fourni par la lentille optique est utilisée. L'information dans les plus grands angles du champ angulaire est perdue et n'est plus disponible pour des opérations de traitement et d'analyses ultérieurs.

La demande de brevet US2010/0119172 décrit un procédé dans lequel l'introduction d'un facteur de zoom sur x est effectuée afin de compenser les pixels fuyant. Cependant, pour une caméra ayant un grand champ angulaire, la distribution résultante des pixels n'est pas utilisable voire impossible à 180°. En effet, tous les pixels convergent vers le centre de l'image (la distribution est éparse sur les côtés et dense au centre). En plus, la performance de l'algorithme de reconstruction en 3D est réduite.

Le procédé décrit dans la demande de brevet US2010/0091090 emploie une projection cylindrique permettant une redistribution uniforme des pixels mais elle n'est pas optimale par rapport à la distribution fournie par le capteur.

Dans le brevet US6608923, on utilise une transformation affine pour réduire l'effet de la distorsion perspective, cependant, la redistribution des pixels n'est pas idéale.

La performance des systèmes de vision artificielle monoculaire tels que des systèmes d'aide à la conduite automobile est ainsi limitée par cette perte d'information contenue dans l'image originale lors du traitement de l'image par le système.

D'ailleurs, on retrouve ces mêmes problèmes et désavantages dans un dispositif de vision stéréoscopique qui effectue un traitement de deux images prises selon des points de vue différents. Deux caméras capturent la même scène vue sous des angles différents et le dispositif estime les distances et la taille des objets de la scène. Un tel dispositif est également utilisé, par exemple, dans des systèmes d'aide à la conduite automobile.

Un tel dispositif de vision stéréoscopique calcule la profondeur des objets dans la scène à partir de la paire d'images stéréo en trouvant des correspondances entre les deux points de vue. Des points dans les images gauche et droite, qui sont des projections du même point de la scène, sont identifiés. La différence entre les emplacements des deux points correspondants est appelé la disparité, qui est inversement proportionnelle à la profondeur.

Afin d'observer un objet proche des caméras, le dispositif doit réaliser une recherche de la disparité dans un grand intervalle, ce qui exige des calculs lourds et coûteux. Ceci est la conséquence directe de la formule classique $d=fxB/Z$ où $f$ est la longueur focale de la lentille, $d$ est la disparité, $B$ est la base de triangulation et $Z$ est la profondeur. Durant la localisation d'un objet proche des caméras, la valeur de $Z$ est petite et la disparité est grande. Les dispositifs de vision stéréoscopique connus limitent cet intervalle de recherche afin d'éviter ces calculs lourds et coûteux et, par conséquent, l'observation des objets proches des caméras est aussi limitée.

La demande de brevet EP2068280 décrit un appareil de traitement d'image capable de réduire une quantité de mémoire devant être utilisée et un temps de traitement dans le traitement des images capturées stéréoscopiquement en grand angle. Afin de trouver des positions de pixels d'un objet M comme informations pour une utilisation dans la détection de la position de l'objet M à partir des images capturées par deux caméras C qui sont capables de formation d'image de l'objet M en grand angle et sont disposé sur une ligne droite, l'appareil de traitement d'image comprend un moyen d'entrée d'image pour entrer les images capturées, des moyens de projection d'image pour projeter les images entrées sur un support cylindrique ayant une ligne axiale disposée en parallèle avec la ligne droite sur laquelle les caméras respectives sont disposés tout en corrigeant les distorsions, et des moyens de détection d'une position de pixel pour détecter les positions des pixels correspondant à l'objet M dans l'image projetée sur le support cylindrique.

La demande de brevet EP2381673 divulgue l'acquisition de deux images, la correction de la distorsion selon les deux axes, puis la rectification d'images. La distorsion initiale est ensuite ré-appliquée aux images rectifiées, selon les deux axes.

L'article de conférence "Implémentation of 3D undistorting algorithm for stereo camera", Lee H.S. et al., IEEE International Workshop on Intelligent Data Acquisition and Advanced Computing Systems: Technology and Applications, 21-23 Sep. 2009, Rende, Italy, divulgue également l'acquisition de deux images, la correction de la distorsion selon les deux axes, puis la rectification d'images. Cependant, aucune distorsion n'est ensuite appliquée aux images rectifiées.

Le but de l'invention est donc de résoudre ces problèmes.

A cet effet, l'invention a pour objet un procédé du type précité, caractérisé par les étapes de :

- appliquer une rectification d'image à l'image dans laquelle la distorsion a été supprimée et à l'image supplémentaire dans laquelle la distorsion a été supprimée afin de projeter lesdites images sur un plan commun ;
- appliquer une distorsion d'image à l'image rectifiée uniquement au premier axe de coordonnées x ou uniquement au second axe de coordonnées y de l'image rectifiée afin de déformer l'image rectifiée suivant ledit axe de coordonnées ; et
- appliquer une distorsion d'image supplémentaire à l'image supplémentaire rectifiée uniquement au premier axe de coordonnées x ou uniquement au second axe de coordonnées y de l'image supplémentaire rectifiée afin de déformer l'image supplémentaire rectifiée suivant ledit axe de coordonnées ;

où la distorsion d'image appliquée lors de l'étape d'appliquer une distorsion d'image à l'image rectifiée est la distorsion supprimée dans l'image $I_1$ auparavant lors de l'étape de supprimer une distorsion dans l'image $I_1$ ou une distorsion sensiblement la même que la distorsion supprimée dans l'image $I_1$ auparavant lors de l'étape de supprimer une distorsion dans l'image $I_1$, et la distorsion d'image supplémentaire appliquée lors de l'étape d'appliquer une distorsion d'image supplémentaire à l'image supplémentaire rectifiée est la distorsion supprimée dans l'image supplémentaire $I_2$ auparavant lors de l'étape de supprimer une distorsion dans l'image supplémentaire $I_2$ ou une distorsion sensiblement la même que la distorsion supprimée dans l'image supplémentaire $I_2$ auparavant lors de l'étape de supprimer une distorsion dans l'image supplémentaire $I_2$.

Suivant d'autres caractéristiques de l'invention :

- le procédé comprend en outre l'étape d'appliquer, à l'image rectifiée à laquelle une distorsion d'image a été appliquée, une distorsion d'image uniquement à l'autre axe de coordonnées auquel la distorsion d'image n'a pas été appliquée, afin de déformer l'image suivant ledit autre axe de coordonnées, et, en outre, l'étape d'appliquer, à l'image supplémentaire rectifiée à laquelle une distorsion d'image supplémentaire a été appliquée, une distorsion d'image supplémentaire uniquement à l'autre axe de coordonnées auquel la distorsion d'image supplémentaire n'a pas été appliquée, afin de déformer l'image suivant ledit autre axe de coordonnées, où la distorsion d'image appliquée est la distorsion supprimée dans l'image $I_1$ auparavant lors de l'étape de supprimer une distorsion dans l'image $I_1$ ou une distorsion sensiblement la même que la distorsion supprimée dans l'image $I_1$ auparavant lors de l'étape de supprimer une distorsion dans l'image $I_1$, et la distorsion d'image supplémentaire appliquée est la distorsion supprimée dans l'image supplémentaire $I_2$ auparavant lors de l'étape de supprimer une distorsion dans l'image supplémentaire $I_2$ ou une distorsion sensiblement la même que la distorsion supprimée dans l'image supplémentaire $I_2$ auparavant lors de l'étape de supprimer une distorsion dans l'image supplémentaire $I_2$ ;

- lors de l'étape d'appliquer une distorsion d'image supplémentaire à l'image supplémentaire rectifiée uniquement au premier axe de coordonnées x ou uniquement au second axe de coordonnées y de l'image supplémentaire $I_2$, la distorsion d'image supplémentaire est appliquée au même axe de coordonnées que celui auquel la distorsion d'image a été appliquée lors de l'étape d'appliquer une distorsion d'image à l'image rectifiée ;
- la distorsion d'image est appliquée à l'image rectifiée uniquement au premier axe de coordonnées x, et à l'image rectifiée uniquement au second axe de coordonnées y ; et la distorsion d'image supplémentaire est appliquée à l'image supplémentaire rectifiée uniquement au premier axe de coordonnées x et à l'image supplémentaire rectifiée uniquement au second axe de coordonnées y de l'image supplémentaire $I_2$ ;
- lorsque la distorsion d'image supplémentaire est appliquée uniquement au premier axe de coordonnées x de l'image supplémentaire rectifiée et la distorsion d'image est appliquée uniquement au premier axe de coordonnées x de l'image rectifiée, la distorsion d'image supplémentaire appliquée à l'image supplémentaire rectifiée est la distorsion supprimée dans l'image supplémentaire $I_2$ auparavant lors de l'étape de supprimer une distorsion dans l'image supplémentaire $I_2$ et la distorsion d'image appliquée à l'image rectifiée est la distorsion supprimée dans l'image $I_1$ auparavant lors de l'étape de supprimer une distorsion dans l'image $I_1$ ;

- lorsque la distorsion d'image supplémentaire est appliquée uniquement au second axe de coordonnées y de l'image supplémentaire rectifiée et la distorsion d'image est appliquée uniquement au second axe de coordonnées y de l'image rectifiée, lors de l'étape d'appliquer une distorsion d'image supplémentaire à l'image supplémentaire rectifiée uniquement au premier axe de coordonnées x ou uniquement au second axe de coordonnées y de l'image supplémentaire rectifiée et lors de l'étape d'appliquer une distorsion d'image à l'image rectifiée uniquement au premier axe de coordonnées x ou uniquement au second axe de coordonnées y de l'image rectifiée respectivement, la distorsion d'image supplémentaire appliquée à l'image supplémentaire rectifiée et la distorsion d'image appliquée à l'image rectifiée sont identiques ;
- la distorsion d'image supplémentaire appliquée uniquement au second axe de coordonnées y de l'image supplémentaire rectifiée et la distorsion d'image appliquée uniquement au second axe de coordonnées y de l'image rectifiée sont identiques ;
- la distorsion d'image supplémentaire appliquée uniquement au premier axe de coordonnées x de l'image supplémentaire rectifiée et la distorsion d'image appliquée uniquement au premier axe de coordonnées x de l'image rectifiée sont respectivement la distorsion supprimée dans l'image supplémentaire $I_2$ auparavant lors de l'étape de supprimer une distorsion dans l'image supplémentaire $I_2$ et la distorsion supprimée dans l'image $I_1$ auparavant lors de l'étape de supprimer une distorsion dans l'image $I_1$ ;
- la distorsion d'image supplémentaire appliquée uniquement au second axe de coordonnées y de l'image supplémentaire rectifiée et la distorsion d'image appliquée uniquement au second axe de coordonnées y de l'image rectifiée est la distorsion supprimée dans l'image supplémentaire $I_2$ auparavant lors de l'étape de supprimer une distorsion dans l'image supplémentaire $I_2$, ou la distorsion supprimée dans l'image $I_1$ auparavant lors de l'étape de supprimer une distorsion dans l'image $I_1$, ou un mélange de la distorsion supprimée dans l'image supplémentaire $I_2$ et de la distorsion supprimée dans l'image $I_1$.

L'invention a également pour objet un dispositif pour optimiser la quantité d'information contenue dans une image traitée. Le dispositif comprend :

- une unité d'obtention d'image apte à obtenir une image $I_1$ à partir d'un dispositif d'acquisition d'image, l'image $I_1$ incluant un premier axe de coordonnées x et un second axe de coordonnées y, l'unité d'obtention d'image étant en outre apte à obtenir une image supplémentaire $I_2$ à partir d'un dispositif d'acquisition d'image supplémentaire, l'image supplémentaire $I_2$ incluant un premier axe de coordonnées x et un second axe de coordonnées y ;
- une unité de suppression de distorsion apte à supprimer une distorsion dans l'image $I_1$ et en outre apte à supprimer une distorsion dans l'image supplémentaire $I_2$.

Le dispositif est **caractérisé en ce qu'il** comprend en outre :

- une unité de rectification apte à appliquer une rectification d'image à l'image dans laquelle la distorsion a été supprimée et à l'image supplémentaire dans laquelle la distorsion a été supprimée afin de projeter lesdites images sur un plan commun ;
- une unité d'application de distorsion configurée pour appliquer une distorsion d'image à l'image rectifiée uniquement au premier axe de coordonnées x, et configurée pour appliquer une distorsion d'image à l'image rectifiée uniquement au second axe de coordonnées y de l'image afin de déformer l'image suivant lesdits axes de coordonnées, et

l'unité d'application de distorsion est en outre configurée pour appliquer une distorsion d'image supplémentaire à l'image supplémentaire rectifiée uniquement au premier axe de coordonnées x et configurée pour appliquer une distorsion d'image supplémentaire à l'image supplémentaire rectifiée uniquement au second axe de coordonnées y de l'image supplémentaire rectifiée.

L'invention a également pour objet un système de vision artificielle comprenant un dispositif tel que défini ci-dessus.

L'invention a également pour objet un système de vision artificielle comprenant un dispositif tel que défini ci-dessus et comprenant en outre un dispositif d'acquisition d'image et un dispositif d'acquisition d'image supplémentaire.

L'invention a également pour objet un véhicule automobile comprenant un système de vision artificielle tel que défini ci-dessus.

L'invention a également pour objet un produit programme d'ordinateur pour une unité de traitement, le produit programme d'ordinateur étant enregistré sur un support et comprend des portions de code de logiciel lisibles par l'unité de traitement pour exécuter les étapes du procédé tel que défini ci-dessus.

L'invention sera mieux comprise à la lecture de la description qui va suivre, dans laquelle un exemple de réalisation va être décrit en regard des dessins annexés sur lesquels :

- la Figure 1 montre une image prise avec une lentille grand angle ;
- la Figure 2 montre l'image de la Figure 1 traitée pour supprimer une distorsion dans l'image, par application d'une transformation classique de suppression de la distorsion ;
- la Figure 3 montre un bord vertical de l'image de la Figure 1 et une grille ayant une pluralité de carrés représentant une image sans distorsion ;
- la Figure 4 montre une portion du centre de l'image montrée dans la Figure 3 ;
- la Figure 5 montre la portion extraite et retenue de l'image sans distorsion de la Figure 2 ;
- la Figure 6 montre un système de vision artificielle 1 selon une première variante de la présente invention ;
- la Figure 7 montre l'image qui résulte de l'application d'une distorsion à l'image montrée dans la Figure 2, la distorsion étant appliquée uniquement au premier axe de coordonnées x ;

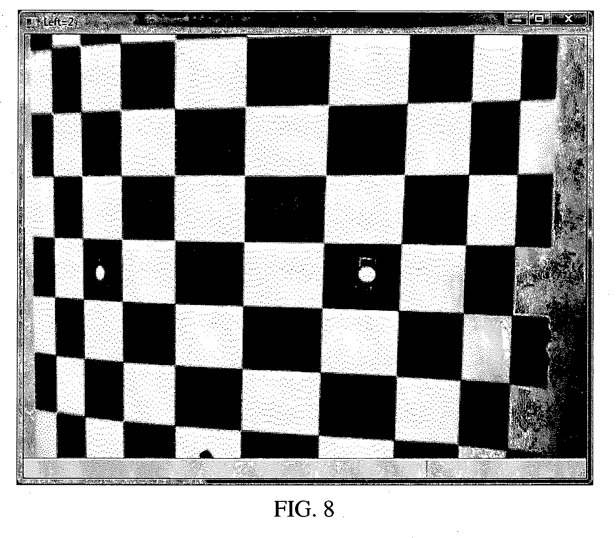

- la Figure 8 montre la portion extraite et retenue de l'image montrée dans la Figure 7 ;

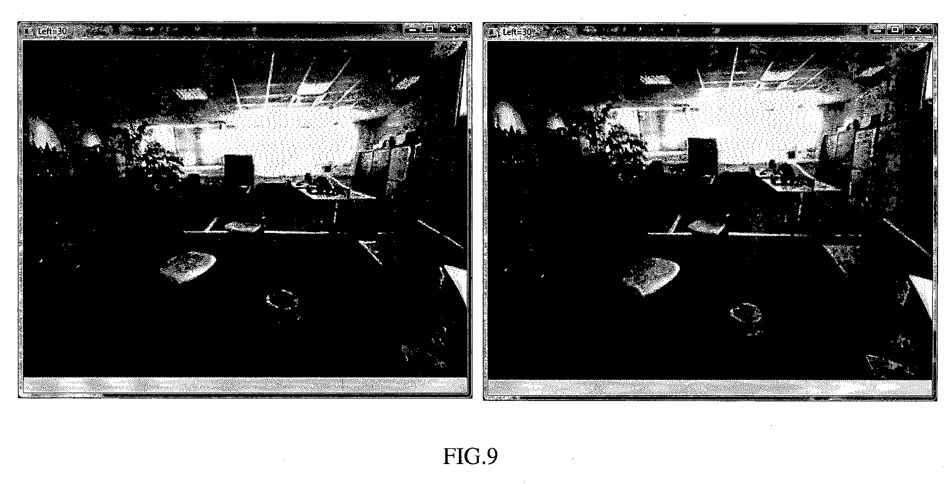

- la Figure 9 montre deux images où une distorsion est appliquée uniquement au second axe de coordonnées y dans l'image de droite et aucune distorsion n'est appliquée à l'image de gauche ;

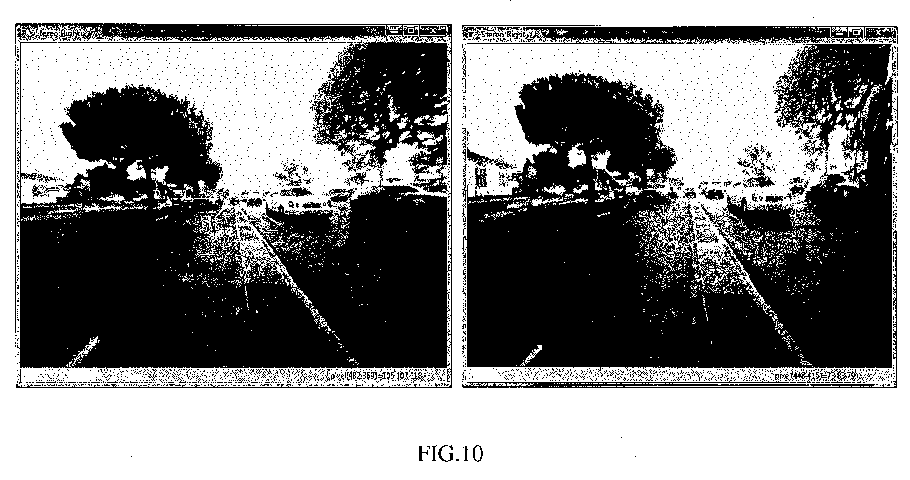

- la Figure 10 montre deux images où une distorsion est appliquée uniquement au premier axe de coordonnées x dans l'image de droite et aucune distorsion n'est appliquée à l'image de gauche ;

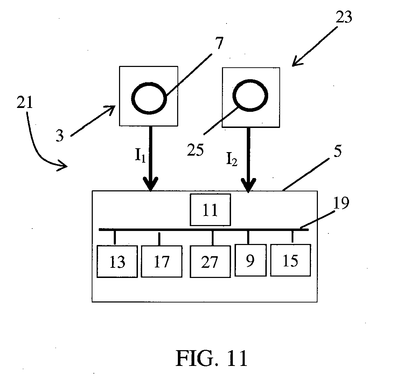

- la Figure 11 montre un système de vision artificielle selon une seconde variante de la présente invention ; et

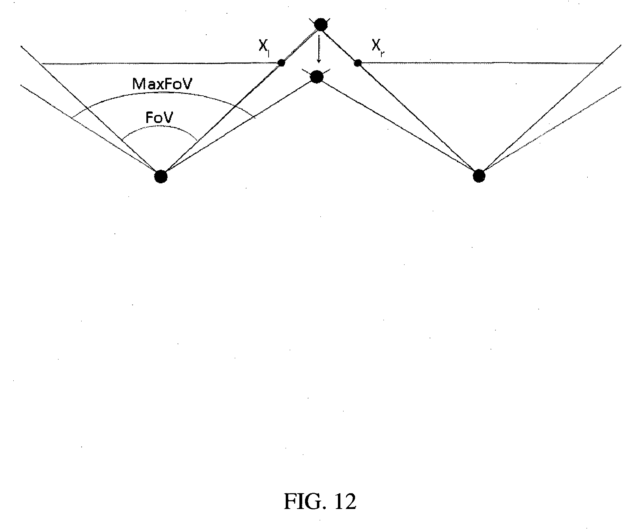

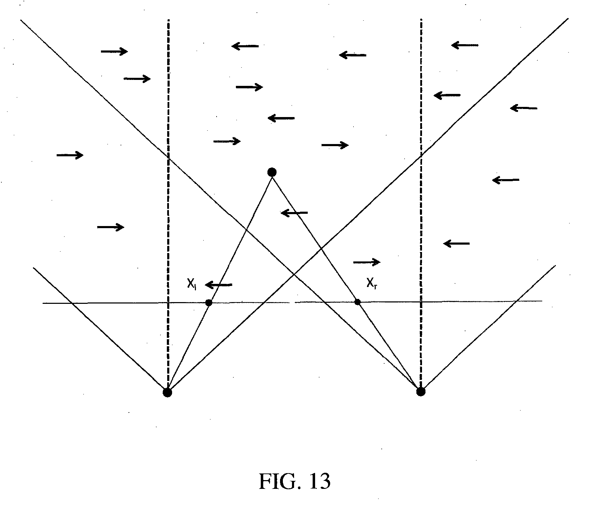

- les Figures 12 et 13 illustrent comment un point encore plus proche des dispositifs d'acquisition d'image ou d'un véhicule peut être observé grâce à la présente invention.

On a illustré sur la figure 6 un système de vision artificielle 1 selon une première variante de la présente invention. Le système de vision artificielle 1 comprend un dispositif d'acquisition d'image 3 et un dispositif central 5 pour optimiser la quantité d'information contenue dans une image traitée.

Le dispositif d'acquisition d'image 3 comprend une lentille optique 7 et il est relié au dispositif de traitement d'image 5. Le dispositif d'acquisition d'image 3 peut être n'importe quel appareil permettant de générer une image numérique à partir d'une visée optique, tel que par exemple un appareil photographique ou un caméscope numérique. Le dispositif d'acquisition d'image 3 est apte à acquérir une ou plusieurs images d'une scène, à numériser ces images et à les rendre disponibles pour être traitées par le dispositif de traitement d'image 5. L'image fournie par le dispositif d'acquisition d'image 3 inclut une pluralité de pixels (éléments d'image) et elle a un premier axe de coordonnées x et un second axe de coordonnées y quasiment perpendiculaire au premier axe de coordonnées x.

Le dispositif de traitement d'image 5 comprend une unité centrale 9, une unité d'obtention d'image 11, une unité de suppression de distorsion 13, une unité d'application de distorsion 15 et une unité de stockage 17. L'unité centrale 9, l'unité d'obtention d'image 11, l'unité de suppression de distorsion 13, l'unité d'application de distorsion 15 et une unité de stockage 17 sont toutes reliées les unes aux autres par un bus de communication 19.

L'unité centrale 9 est, par exemple, un microprocesseur, et est configurée pour gérer le fonctionnement du système 1. Elle est configurée pour gérer une communication entre les unités, une communication entre le dispositif de traitement d'image 5 et le dispositif d'acquisition d'image 3 et une communication entre le dispositif central 5 et d'autres dispositifs, par exemple, à l'extérieur du système 1. Elle est aussi configurée pour faire fonctionner chaque unité du dispositif de traitement d'image 5 et de gérer le fonctionnement du dispositif d'acquisition d'image 3.

L'unité de stockage 17 est, par exemple, une mémoire flash et stocke un programme de gestion du fonctionnement du système 1 exécutés par l'unité centrale 9 pour gérer le fonctionnement du système 1, des programmes pour effectuer et gérer la communication entre les unités, la communication entre le dispositif de traitement d'image 5 et le dispositif d'acquisition d'image 3 et la communication entre le dispositif de traitement d'image 5 et d'autres dispositifs. Elle stocke un programme de fonctionnement pour chaque unité du dispositif de traitement d'image 5 qui est exécuté par l'unité centrale 9 pour faire fonctionner chaque unité du système, ainsi qu'un programme de gestion du dispositif d'acquisition d'image 3 pour gérer le fonctionnent du dispositif d'acquisition d'image 3. Elle stocke aussi les images numériques fournies par le dispositif d'acquisition d'image 3.

L'unité d'obtention d'image 11 est raccordée au dispositif d'acquisition d'image 3 et est configurée à communiquer avec celui-ci afin d'obtenir ou recevoir des images numériques capturées par celui-ci.

L'unité de suppression de distorsion 13 est configurée pour supprimer une distorsion dans une image fournie par le dispositif d'acquisition d'image 3. L'image formée par la lentille optique 7 inclut une distorsion venant des défauts optiques de la lentille qui se traduit souvent par une courbure des lignes droites de l'objet de l'image. Cette distorsion est présente dans des images formées par toutes les lentilles optiques et elle est la plus sévère pour les lentilles optiques grand angle.

L'unité d'application de distorsion 15 est configurée pour appliquer une distorsion à une image. Elle est configurée pour appliquer une distorsion à une image uniquement au premier axe de coordonnées x, et configurée pour appliquer une distorsion d'image à une image uniquement au second axe de coordonnées y de l'image afin de déformer l'image suivant lesdits axes de coordonnées.

L'opération du système de vision artificielle 1 selon la première variante de la présente invention sera maintenant décrite. Le dispositif d'acquisition d'image 3 acquiert et numérise une image $I_1$.

Les opérateurs indiqués dans les formules ci-dessous sont appliquée au choix à l'image $I_1$:

$$I_1' = A_s D_{1x} D_1^{-1} A^{-1} I_1 \qquad (1)$$

$$I_1' = A_s D_{1y} D_1^{-1} A^{-1} I_1 \qquad (2)$$

$$I_1' = A_s D_{1y} D_{1x} D_1^{-1} A^{-1} I_1 \qquad (3)$$

$$I_1' = A_s D_{1x} D_{1y} D_1^{-1} A^{-1} I_1 \qquad (4)$$

où $I_1$ est l'image d'entrée, $A^{-1}$ est un opérateur contenant des paramètres intrinsèques du dispositif d'acquisition d'image 3 (par exemple, la distance focale, la taille des pixels, le point principal où l'axe optique rencontre le plan image), $A_s$ est un opérateur contenant des paramètres intrinsèques sélectionnés de l'image résultante, cette sélection est arbitraire elle est en générale de la forme :

$$A_s = \begin{bmatrix} f & 0 & w/2 \\ 0 & f & h/2 \\ 0 & 0 & 1 \end{bmatrix}$$

avec f une focale (distance focale) arbitraire, w et h étant respectivement la largeur et la hauteur de l'image acquise en pixel, $D_1^{-1}$ est un opérateur de suppression de distorsion, $D_{1x}$ est un opérateur d'application de distorsion uniquement au premier axe de coordonnées x de l'image $I_1$, $D_{1y}$ est un opérateur d'application de distorsion uniquement au second axe de coordonnées y de l'image $I_1$ et $I_1'$ est l'image de sortie. Les opérateurs $A^{-1}$ et $A_s$ sont des opérateurs linéaires représentés par une matrice 3x3 dans laquelle la transformation à être appliquée par l'opérateur est encodée. Les

opérateurs $D^{-1}$, $D_x$, $D_y$ sont des opérateurs non linéaires.

L'unité d'obtention d'image 11 récupère l'image $I_1$ et la fournit à l'unité de suppression de distorsion 13. L'unité de suppression de distorsion 13 supprime ou corrige une distorsion présente dans l'image $I_1$ venant des défauts optiques de la lentille 7.

L'unité de suppression de distorsion 13 applique d'abord l'operateur $A^{-1}$ à l'image $I_1$. Classiquement A est une matrice 3x3 ayant, la forme suivante:

$$A = \begin{bmatrix} f_u & \gamma & u_0 \\ 0 & f_v & v_0 \\ 0 & 0 & 1 \end{bmatrix} \qquad\qquad (5)$$

où $f_u$ est la focale selon x, $f_v$ est la focale selon y, $\gamma$ est un paramètre codant l'angle entre les axes x et y (le *skew* en anglais), $(u_0, v_0)$ est le point principal.

Afin de supprimer ou corriger la distorsion présente dans l'image $I_1$, un opérateur de suppression de distorsion $D_1^{-1}$ est appliqué à l'image $I_1$. Le choix de l'opérateur de suppression de distorsion $D_1^{-1}$ n'est pas limité et peut être, par exemple, un opérateur de suppression de distorsion $D^{-1}$ estimé avec des modèles de distorsion connus tel qu'un polynome du second ordre ayant la forme $D(x)=1+K1*x+K2*x^2$. $D^{-1}$ est calculée à l'aide d'une solution numérique classique (formule direct, Newton...). Voir par example "Multiple View Geometry", R. Hartley and A. Zisserman, ISBN 978-0-521-54051-3, page 191. Par exemple, pour la Formule (1), pour chaque pixel p(x,y), on obtient $p_d(x_d,y_d)$ en appliquant $A^{-1}$ au vecteur (x,y,1), et puis $p_d(x_d,y_d)$ est transformé en $p_u(x_u,y_u)$ en appliquant la (dé-)distorsion $D^{-1}$ par l'intermédiaire de la formule suivant :

$$p_u = \begin{vmatrix} x_u \\ y_u \end{vmatrix} = \begin{vmatrix} x_d * D^{-1}(r^2) \\ y_d * D^{-1}(r^2) \end{vmatrix} \qquad \text{où} \quad r^2 = \left(x_u - x_0\right)^2 + \left(y_u - y_0\right)^2 \qquad (6)$$

où $\begin{vmatrix} x_0 \\ y_0 \end{vmatrix}$ est, de manière classique, le centre de la distorsion. Les valeurs numériques de A (par exemple $f_u$, $f_v$, $\gamma$, $u_0$, $v_0$) et de D (par exemple K1, K2) sont estimées préalablement par un processus d'étalonnage de caméra.

Une fois que l'opérateur de suppression de distorsion $D_1^{-1}$ est estimé, il est ensuite appliqué à chaque pixel de l'image afin de supprimer la distorsion présente.

Ensuite, l'unité d'application de distorsion 15 applique une distorsion à l'image $I_{1a}$ qui est l'image dans laquelle la distorsion a été supprimée.

L'unité d'application de distorsion 15 applique une distorsion à l'image $I_{1a}$ uniquement au premier axe de coordonnées x de l'image afin de déformer l'image suivant l'axe de coordonnées x (Formule (1)). Alternativement, l'unité d'application de distorsion 15 applique une distorsion à l'image $I_{1a}$ uniquement au second axe de coordonnées y de l'image afin de déformer l'image suivant l'axe de coordonnées y (Formule (2)).

Pour appliquer une distorsion uniquement selon x, respectivement uniquement selon y, il suffit d'utiliser la formule suivante à la place de la formule (6):

$$\begin{vmatrix} x_d \\ y_d \end{vmatrix} = \begin{vmatrix} x_u * D((x_u - u_0)^2) \\ y_u \end{vmatrix} \text{, respectivement} \quad \begin{vmatrix} x_d \\ y_d \end{vmatrix} = \begin{vmatrix} x_u \\ y_u * D((y_u - v_0)^2) \end{vmatrix}.$$

Alternativement, selon la présente invention, l'unité d'application de distorsion 15 applique une distorsion à l'image $I_{1a}$ d'abord uniquement au premier axe de coordonnées x de l'image afin de déformer l'image suivant l'axe de coordonnées x, et ensuite uniquement au second axe de coordonnées y de l'image afin de déformer l'image suivant l'axe de coordonnées y (Formule (3)). Il est également possible d'appliquer une distorsion à l'image d'abord uniquement au second axe de coordonnées y de l'image et ensuite uniquement au premier axe de coordonnées x de l'image (Formule (4)). Les formules (3) et (4) fournissent le même résultat.

La distorsion appliquée est la distorsion supprimée dans l'image $I_1$ auparavant par l'unité de suppression de distorsion 13 (ou sensiblement la même). Si cette distorsion devait compter une composante tangentielle, cette dernière est supprimée. Alternativement, une distorsion similaire à la distorsion supprimée dans l'image $I_1$ auparavant par l'unité de suppression de distorsion 13 peut être appliquée. Cette distorsion similaire peut se définir par une distorsion qui distribue les pixels de manière similaire à celle de la distorsion supprimée, c'est-à-dire, à quelques pixels près, afin de largement préserver la distribution originale.

L'unité d'application de distorsion 15 applique finalement l'opérateur $A_s$. $A_s$ est une matrice 3x3 ayant, par exemple, la forme suivante:

$$A = \begin{bmatrix} f & 0 & u_0 \\ 0 & f & v_0 \\ 0 & 0 & 1 \end{bmatrix}$$

où $f$ est la focale, et $(u_0, v_0)$ est le point principal. Ici f et $(u_0,v_0)$ sont arbitraires, ils sont classiquement choisit par l'application pour maximiser la zone visible, et par exemple choisir le point principal au centre de l'image.

Les transformations successives dans chaque Formule (1) à (4) sont appliquées à chaque pixel p(x,y) de l'image $I_1$ et transforment les coordonnées image des pixels.

Par exemple, pour la Formule (1), pour chaque pixel p(x,y), on obtient $p_d(x_d,y_d)$ en appliquant $A^{-1}$, et puis $p_d(x_d,y_d)$ est transformé en $p_u(x_u,y_u)$ en appliquant la (dé-)distorsion $D^{-1}$, la distorsion D est réappliquée uniquement selon x en utilisant la formule suivante à la place de la formule (6) :

$$\begin{vmatrix} x_d \\ y_d \end{vmatrix} = \begin{vmatrix} x_u * D((x_u - u_0)^2) \\ y_u \end{vmatrix}$$

Et enfin on applique l'opérateur $A_s$.

Si on veut faire l'axe x et l'axe y (formule (3) et (4)), il faut écrire

$$\begin{vmatrix} x_d \\ y_d \end{vmatrix} = \begin{vmatrix} x_u * D((x_u - u_0)^2) \\ y_u * D((y_u - v_0)^2) \end{vmatrix}$$

La Figure 7 montre l'image $I_1'$ qui résulte de l'application de la distorsion à l'image $I_1$ uniquement au premier axe de coordonnées x. Grâce à la présente invention, l'aspect originale de l'image $I_1$ acquise par le dispositif d'acquisition d'image 3 se trouve largement préservé dans l'image $I_1'$. On remarque que la portion encadrée dans la Figure 7, par un rectangle correspondant au format de l'image à être affiché ou utilisé, inclut en entier le champ angulaire de l'axe x de l'image originale $I_1$. On remarque également que l'information contenue sur les bords verticaux de l'image n'est plus perdue et est disponible pour des opérations de traitement et d'analyses ultérieurs (voir la Figure 2). Ceci est clairement visible lorsqu'on compare les Figures 5 et 8, où la Figure 8 montre la portion extraite et retenue de l'image $I_1'$.

Grâce à la présente invention, la distribution des pixels dans l'image est largement préservée. On obtient plus de pixels au centre de l'image et par conséquent la résolution est localement améliorée. La Figure 9 montre deux images. Selon la présente invention, une distorsion est appliquée aux deux axes dans l'image de droite et uniquement à l'axe x dans l'image de gauche. Grâce à l'amélioration dé la résolution, les tables et les chaises sont plus hautes dans l'image de droite d'où une meilleure définition.

La Figure 10 montre d'autres images où une distorsion est appliquée uniquement au premier axe de coordonnées x dans l'image de droite et aucune distorsion n'est appliquée à l'image de gauche. Le champ angulaire de l'axe x de l'image de droite est augmenté et la résolution au centre de l'image est améliorée. De plus, l'information présente aux bords verticaux de l'image n'est plus coupée lors de l'encadrement qui extrait une portion de l'image correspondant au format de l'image à être affiché ou utilisé.

La présente invention permet ainsi d'utiliser pleinement le champ angulaire fourni par la lentille 7 et d'améliorer la résolution au centre d'image horizontalement et verticalement afin de détecter des objets plus petits. Par conséquent, lorsque le système selon l'invention est utilisé dans un véhicule, il est possible d'améliorer la détection de petits objets présents sur la trajectoire du véhicule. De plus, la présente invention améliore globalement la qualité de l'image car la transformation de l'image entre l'image originale et l'image finale est réduite.

La présente invention permet ainsi d'éviter la perte de l'information contenue dans une l'image lors de son traitement et plus d'information est ainsi disponible pour des opérations de traitement et d'analyses ultérieures.

On a illustré sur la Figure 11 un système de vision artificielle 21 selon une seconde variante de la présente invention. Par rapport au système de vision artificielle 1 selon la première variante de la présente invention, le système de vision artificielle 21 comprend en plus un dispositif d'acquisition d'image supplémentaire 23. Le dispositif d'acquisition d'image 3 et le dispositif d'acquisition d'image supplémentaire 23 forment un couple de dispositifs (gauche et droite) qui sont placées l'un à coté de l'autre avec un décalage latéral. Ces dispositifs capturent une scène à partir de deux points de vue différents.

Le dispositif d'acquisition d'image supplémentaire 23 comprend une lentille optique 25 et il est relié au dispositif de traitement 5. Le dispositif d'acquisition d'image 23 peut être n'importe quel appareil permettant de générer une image numérique à partir d'une visée optique, tel que par exemple un appareil photographique ou un caméscope numérique. Le dispositif d'acquisition d'image supplémentaire 23 est apte à acquérir une ou plusieurs images d'une scène, à numériser ces images et à les rendre disponibles pour être traitées par le dispositif de traitement d'image 5. L'image fournie par le dispositif d'acquisition d'image supplémentaire 23 inclut une pluralité de pixels et elle a un premier axe de coordonnées x et un second axe de coordonnées y quasiment perpendiculaire au premier axe de coordonnées x.

L'unité centrale 9 est configurée pour gérer une communication entre le dispositif de traitement d'image 5 et le dispositif d'acquisition d'image supplémentaire 23 et pour gérer le fonctionnement du dispositif d'acquisition d'image supplémentaire 23.

L'unité de stockage 17 stocke un programme pour effectuer et gérer la communication entre le dispositif de traitement d'image 5 et le dispositif d'acquisition d'image supplémentaire 23 ainsi qu'un programme de gestion du dispositif d'acquisition d'image supplémentaire 23 pour gérer le fonctionnent du dispositif d'acquisition d'image supplémentaire 23. Elle stocke aussi les images numériques fournies par le dispositif d'acquisition d'image supplémentaire 23.

L'unité d'obtention d'image 11 est aussi raccordée au dispositif d'acquisition d'image supplémentaire 23 et est configurée pour communiquer avec celui-ci afin d'obtenir ou recevoir des images numériques capturées par celui-ci.

L'unité de suppression de distorsion 13 est configurée pour supprimer une distorsion dans une image fournie par le dispositif d'acquisition d'image supplémentaire 23.

Le dispositif de traitement d'image 5 comprend en outre une unité de rectification 27 configurée pour appliquer une rectification d'image à l'image fournie par le dispositif d'acquisition d'image 3 et à l'image fournie par le dispositif d'acquisition d'image supplémentaire 23 afin de projeter ces images sur un plan commun et que les lignes des deux images se correspondent globalement.

Cette rectification transforme les images de telle sorte que des droites épipolaires des deux images sont alignées et parallèles à un axe horizontal car en général les droites épipolaires sont inclinées.

Ceci permet de trouver les points dans les images qui correspondent au même point physique dans l'espace 3D. Avec cette information, ainsi que la géométrie des dispositifs d'acquisition d'image, il est possible de déterminer les emplacements en trois dimensions de tous les points dans les images une fois la mise en correspondance effectuée.

Une mise en correspondance détermine les emplacements des points dans les images qui sont les projections d'un même point physique de l'espace 3D.

Une recherche de ces points est encadrée par la géométrie épipolaire des dispositifs d'acquisition d'image. Suite à l'application d'une rectification d'image, les droites épipolaires des deux images sont alignées et parallèles à un axe horizontal et se correspondent deux à deux, et la recherche est réduite à une recherche 1 D le long de la droite épipolaire.

Les paramètres des dispositifs d'acquisition d'image en combinaison avec les informations de correspondance permettent de reconstruire la scène 3D. Ceci est fait en utilisant la triangulation qui établit une relation entre la profondeur et la disparité. La disparité est la différence entre les positions des points correspondants dans les deux images. Cette disparité est inversement proportionnelle à la profondeur, Par conséquent, en établissant une carte de disparité et en connaissant les paramètres des dispositifs d'acquisition d'image, il est possible de réaliser une reconstruction 3D de la scène.

La rectification appliquée aux images est une rectification classique connue dans l'état de la technique et une description succincte est présentée ci-dessous. Il s'agit de retrouver deux homographies $H_i$ (une par image) représentées par des matrices 3x3. Elles peuvent être retrouvée à partir d'un étalonnage des caméras, même faible, c'est-à-dire à partir de F (la matrice fondamentale caractérisant la géométrie épipolaire) ; ou à partir de E (la matrice essentielle) et des matrices A (les paramètres intrinsèques) ; ou encore d'un étalonnage fort constitué des deux matrices de projection $P_i$. Il existe une variété de dimension 9 de rectifications admissibles. Il n'existe pas de consensus sur le choix d'une rectification dans la variété, chaque application peut faire comme bon lui semble même si la tendance générale cherche à minimiser la déformation image et à maximiser l'information ce qui ne peut-être effectué à ce stade que linéairement. Dans le cadre de cette invention les homographies ne sont que des rotations, car la transformation affine autorisée sera considérée plus loin. Ces rotations alignent les images sur l'axe x entre les deux centres optiques et rendent les plans images parallèles. Une description théorique plus détaillée et même du code peuvent être trouvés par exemple, dans « Three Dimensional Computer Vision », Faugeras, ISBN 0-262-06158-9, §6.3, Devernay thèse de doctorat « Vision stéréoscopique et propriétés différentielles des surfaces », 1997 Ecole Polytechnique, et OpenCV, computer vision with the OpenCV library, www.opencv.org, ISBN 978-0-596-51613-0, page 430.

L'opération du système de vision artificielle 21 selon la seconde variante de la présente invention sera maintenant décrite. Le dispositif d'acquisition d'image 3 acquiert et numérise une image $I_1$ (ou image de gauche) et le dispositif d'acquisition d'image supplémentaire 23 acquière et numérise une image supplémentaire $I_2$ (ou image de droite).

Un des opérateurs indiqués dans les formules ci-dessous est appliqué à l'image $I_1$:

$$I_1' = A_s D_{1x} H_1 D_1^{-1} A_1^{-1} I_1 \qquad (7)$$

$$I_1' = A_s D_{1y} H_1 D_1^{-1} A_1^{-1} I_1 \qquad (8)$$

$$I_1' = A_s D_{1y} D_{1x} H_1 D_1^{-1} A_1^{-1} I_1 \qquad (9)$$

$$I_1' = A_s D_{1x} D_{1y} H_1 D_1^{-1} A_1^{-1} I_1 \qquad (10)$$

et 'opérateur équivalent (11 équivaut à 7, 12 à 8, 13 à 8 et 14 à 10) parmi les opérateurs indiqués dans les formules ci-dessous est appliquée à l'image $I_2$:

$$I_2' = A_s D_{2x} H_2 D_2^{-1} A_2^{-1} I_2 \qquad (11)$$

$$I_2' = A_s D_{2y} H_2 D_2^{-1} A_2^{-1} I_2 \qquad (12)$$

$$I_2' = A_s D_{2y} D_{2x} H_2 D_2^{-1} A_2^{-1} I_2 \qquad (13)$$

$$I_2' = A_s D_{2x} D_{2y} H_2 D_2^{-1} A_2^{-1} I_2 \qquad (14)$$

où $I_2$ est l'image d'entrée, $A_1^{-1}$ est un opérateur contenant les paramètres intrinsèques du dispositif d'acquisition d'image 3 (par exemple, la distance focale, la taille des pixels, le point principal où l'axe optique rencontre le plan image), $A_2^{-1}$ est un opérateur contenant des paramètres intrinsèques du dispositif d'acquisition d'image supplémentaire 23, $D_2^{-1}$ est un un opérateur de suppression de distorsion, $D_{2x}$ est est un opérateur d'application de distorsion uniquement au premier axe de coordonnées x de l'image $I_2$, $D_{2y}$ est un opérateur d'application de distorsion uniquement au second axe de coordonnées y de l'image $I_2$, H est l'opérateur de rectification et $I_2'$ est l'image de sortie. Les opérateurs $A^{-1}_i$ et $H_i$ sont des opérateurs linéaires représentés par des matrices 3x3 dans laquelle la transformation à être appliquée par l'opérateur est encodée. $D_i$ et $D^{-1}_i$ sont des opérateurs non-linéaires.

L'unité d'obtention d'image 11 récupère les images $I_1$ et $I_2$ et les fournit à l'unité de suppression de distorsion 13. L'unité de suppression de distorsion 13 applique d'abord l'opérateur $A_1^{-1}$ à l'image $I_1$ et l'opérateur $A_2^{-1}$ à l'image $I_2$.

L'unité de suppression de distorsion 13 supprime ou corrige une distorsion présente dans l'image $I_1$ venant des défauts optiques de la lentille 7 et une distorsion présente dans l'image $I_2$ venant des défauts optiques de la lentille 25. La distorsion présente dans l'image $I_1$ est supprimée ou corrigée comme décrit ci-dessus pour la première variante et la distorsion présente dans l'image $I_2$ est supprimée ou corrigée de la même manière que la distorsion présente dans l'image $I_1$ en calculant un opérateur de suppression de distorsion $D_2^{-1}$ et en l'appliquant à l'image $I_2$.

L'unité de rectification applique ensuite une rectification d'image à l'image $I_1$ et l'image $I_2$ dans lesquelles la distorsion a été supprimée ou corrigée en appliquant l'opérateur de rectification $H_1$ et l'opérateur de rectification $H_2$ respectivement. Les images résultantes sont des images rectifiées.

Ensuite, l'unité d'application de distorsion 15 applique une distorsion à l'image $I_{1ar}$ qui est l'image $I_1$ à laquelle une rectification a été appliquée et dans laquelle la distorsion a été supprimée (et l'opérateur $A_1^{-1}$ a été appliqué), et à l'image $I_{2ar}$ qui est l'image supplémentaire $I_2$ à laquelle une rectification a été appliquée et dans laquelle la distorsion a été supprimée (et l'opérateur $A_2^{-1}$ a été appliqué).

L'unité d'application de distorsion 15 applique une distorsion aux images $I_{1ar}$ et $I_{2ar}$ uniquement au premier axe de coordonnées x des images afin de déformer chaque image suivant l'axe de coordonnées x (Formules (7) et (11)).

Alternativement, l'unité d'application de distorsion 15 applique une distorsion aux images $I_{1ar}$ et $I_{2ar}$ uniquement au second axe de coordonnées y des images afin de déformer chaque image suivant l'axe de coordonnées y (Formules (8) et (12)).

Alternativement, selon la présente invention, l'unité d'application de distorsion 15 applique une distorsion aux images $I_{1ar}$ et $I_{2ar}$ d'abord uniquement au premier axe de coordonnées x des images afin de déformer les images suivant l'axe de coordonnées x, et ensuite uniquement au second axe de coordonnées y des images afin de déformer l'image suivant l'axe de coordonnées y (Formules (9) et (13)). Il est également possible d'appliquer une distorsion à l'image d'abord uniquement au second axe de coordonnées y de l'image et ensuite uniquement au premier axe de coordonnées x de l'image (Formules (10) et (14)).

Alternativement, selon la seconde variante de la présente invention, l'unité d'application de distorsion 15 applique une distorsion uniquement au premier axe de coordonnées x uniquement à l'une ou l'autre des images $I_{1ar}$ et $I_{2ar}$ mais pas les deux.

Lorsque la distorsion est appliquée par les opérateurs de distorsion $D_{1x}$ et $D_{2x}$ (uniquement au premier axe de coordonnées x) aux images $I_{1ar}$ et $I_{2ar}$, la distorsion appliquée à l'image $I_{1ar}$ est la distorsion supprimée dans l'image $I_1$ auparavant par l'opérateur de suppression de distorsion $D_1^{-1}$ (ou sensiblement la même), et la distorsion appliquée à l'image $I_{2ar}$ est la distorsion supprimée dans l'image supplémentaire $I_2$ auparavant par l'opérateur de suppression de distorsion $D_2^{-1}$ (ou sensiblement la même). Néanmoins si la distorsion utilisée admet une composante tangentielle, cette dernière est omise lors de l'étape appliquer la distorsion. Alternativement, une distorsion similaire à la distorsion supprimée dans les images $I_1$ et $I_2$ auparavant par l'unité de suppression de distorsion 13 peut être appliquée. Cette distorsion similaire peut se définir par une distorsion qui distribue les pixels de manière similaire à celle de la distorsion supprimée, c'est-à-dire, à quelques pixels près, afin de largement préserver la distribution originale.

Ceci est aussi vrai lorsque la distorsion est appliquée par les opérateurs de distorsion $D_{1x}$ et $D_{2x}$ après une application des opérateurs de distorsion $D_{1y}$ et $D_{2y}$ (Formules (10) et (14)).

Lorsque la distorsion est appliquée par les opérateurs de distorsion $D_{1y}$ et $D_{2y}$ (uniquement au second axe de coordonnées y) aux images $I_{1ar}$ et $I_{2ar}$, la distorsion appliquée aux images $I_{1ar}$ et $I_{2ar}$ est identique (ou sensiblement identique).

La distorsion appliquée peut être la distorsion supprimée dans l'image supplémentaire $I_2$ auparavant par l'opérateur de suppression de distorsion $D_2^{-1}$ ou la distorsion supprimée dans l'image $I_1$ auparavant par l'opérateur de suppression de distorsion $D_1^{-1}$ ou encore un mélange la distorsion supprimée dans l'image supplémentaire $I_2$ auparavant par l'opérateur de suppression de distorsion $D_2^{-1}$ et la distorsion supprimée dans l'image I1 auparavant par l'opérateur de suppression de distorsion $D_1^{-1}$.

Alternativement, une distorsion similaire à la distorsion supprimée dans les images $I_1$ et $I_2$ auparavant peut être appliquée. Cette distorsion similaire peut se définir par une distorsion qui distribue les pixels de manière similaire à celle de la distorsion supprimée, c'est-à-dire, à quelques pixels près, afin de largement préserver la distribution originale. Cette distorsion similaire appliquée aux images $I_{1ar}$ et $I_{2ar}$ est identique ou sensiblement identique.

Ceci est aussi vrai lorsque la distorsion est appliquée par les opérateurs de distorsion $D_{1y}$ et $D_{2y}$ après une application des opérateurs de distorsion $D_{1x}$ et $D_{2x}$ (Formules (9) et (13)).

En plus des avantages déjà mentionnés ci-dessus pour la première variante de la présente invention, la seconde variante préserve la rectification de l'image et réduit la disparité des objets proches grâce à la nouvelle distribution des pixels.

Une recherche de la disparité peut ainsi être effectuée dans un intervalle plus petit, ce qui nécessite des calculs moins lourds et moins coûteux. Alternativement, des objets plus proches des dispositifs d'acquisition d'image ou d'un véhicule peuvent être observés pour un même intervalle de recherche.

Ceci est illustré dans les Figures 12 et 13 où il est montré, dans un plan horizontal, comment un point encore plus proche des dispositifs d'acquisition d'image ou d'un véhicule peut être observé grâce à la présente invention qui permet d'utiliser pleinement le champ angulaire fourni par les lentilles 7 et 25.

Dans les Figures 12 et 13, $x_l$ est la projection du point initial le plus proche dans l'image de gauche et $x_r$ est la projection du point initial le plus proche dans l'image de droite. Pour des distorsions de type « coussinet », $x_l$ est réduit et $x_r$ est augmenté et la disparité $d = x_l - x_r$ est réduite. La Figure 13 illustre trois zones. Grace à la présente invention, $x_l$ et $x_r$ sont augmenté dans la zone 1, $x_l$ augmente et $x_r$ diminue dans la zone 2, et la zone 3 agit comme la zone 1 mais d'une manière symétrique. Pour la zone 1 respectivement la zone 3, on remarque que $x_r$ augmente plus fortement que $x_l$ En effet, ceci vient du fait que, sans distorsion, $x_r \leq x_l$ (on rappelle que $d \geq 0$), ainsi $x_r$ est plus loin du centre que $x_l$, et

l'application de la distorsion a un effet plus fort car la distorsion est non-linéaire et du type « coussinet ». Ici, on suppose que les deux distorsions sont comparables, ce qui est le cas en pratique. Dans la zone 1, d est réduit et ainsi d est réduit partout. Par conséquent, pour une même profondeur, l'intervalle de disparité correspondant est réduit et la performance de l'algorithme de recherche est augmentée. Réciproquement, si un même intervalle de disparité est maintenu, la profondeur est améliorée et des objets plus proches peuvent être observés.

Dans la première variante et la seconde variante de l'invention, d'autres transformations peuvent ensuite être appliquées.

Une transformation de centrage C pour centrer l'image en combinaison avec une transformation affine peut ensuite être appliquée, par exemple, selon la formule indiquée ci-dessous, afin de supprimer des portions noires qui peuvent apparaitre aux bords de l'image par exemple lorsqu'un point principal de l'image n'est pas correctement centré :

$$I' = CA_s[D_y]D_xHD^{-1}A^{-1}I \qquad (15)$$

où C est un opérateur de centrage et $[D_y]$ signifie que l'operateur $D_y$ est facultatif comme expliqué ci-dessus. L'opérateur de centrage C peut être embarqué dans l'operateur $A_s$.

Pour estimer l'opérateur de centrage C selon l'axe de coordonnée x, deux coefficients affines (a,b) qui envoient l'axe x déformé en arrière vers [0,w] sont recherchés, w étant la largeur de l'image. Les emplacements des points $m_0=(0,0)$ et $m_w=(w,0)$ sont analysés. La coordonnée y peut être omise. A partir de l'image incidente :

$m_{0r}=CA_sD_xHD^{-1}A^{-1}m_0$ devrait être envoyé à 0, et
$m_{wr}=CA_sD_xHD^{-1}A^{-1}m_w$ devrait être envoyé à w.

C'est une matrice 3x3 de la forme $\begin{bmatrix} a & 0 & b \\ 0 & 1 & 0 \\ 0 & 0 & 1 \end{bmatrix}$ .

Avec $x=m_x$, on note pour l'image droite $x_{0r}$ respectivement $x_{wr}$ la coordonnée selon x de $m_{0r}$ respectivement $m_{wr}$. Ces coordonnées dépendent des paramètres (a,b). On trouve facilement que $a = \frac{w}{x_{wr}-x_{0r}}$ et $= \frac{-x_{0r}*w}{x_{wr}-x_{0r}}$ .

Dans le cas où une distorsion est aussi appliquée à l'axe y (Formule 8, 9, et 10), il est nécessaire de centrer aussi l'image en y. La même procédure peut-être appliquée en considérant C de la forme $\begin{bmatrix} 1 & 0 & 0 \\ 0 & a & b \\ 0 & 0 & 1 \end{bmatrix}$ . Il faut alors considérer y à la place de x, et h (la hauteur de l'image) à la place de w. L'opérateur de centrage final devient alors $C=C_xC_y=C_yC_x$.

Dans le cas où un opérateur de centrage est appliqué selon la coordonnée x ($C_x$) et selon la coordonnée y ($C_y$), l'opérateur $A_s$ n'a pas besoin d'être explicité car il est entièrement redéfinit par les opérateurs de centrage. Puisque les variétés des $CA_s$ et des $A_s$ sont identiques.

Afin d'effectuer une reconstruction en 3D, un algorithme d'appariement est exécuté afin de fournir une carte de disparité. Afin de reconstruire chaque pixel, il est nécessaire de récupérer le vrai emplacement du pixel (sans distorsion) et la vraie disparité.

Le calcul est identique pour chaque rangée (ou colonne respectivement) et une table est ainsi utilisée.

Pour le point dans l'image de droite, une table est formée pour l'image de droite en prenant comme entrée un entier de [O...w] (w étant la largeur de l'image) et retournant une valeur flottante (le nouveau x). A la sortie, ce nouveau x est attribué au pixel.

Le point dans l'image de gauche est identifié par la disparité d ($x_l=x_r+d$) et d est une valeur flottante. La table devrait prendre comme entrée une valeur flottante mais ceci n'est pas possible et une table de sous-pixels est créée ayant une résolution R telle que :

```
for (int i=0; i<w*R; ++i)
  Table_left[i] ← Undistort_x(i/R)
```

Pour prendre une entrée d'une valeur flottante x, il suffit d'écrire Table_left[int(x*R)]. La résolution peut varier entre 1 à 256, par exemple.

Des tables différentes sont nécessaires pour l'image de gauche et l'image de droite car (i) leurs distorsions sont différentes et (ii) l'image de droite prend des entrées w alors que l'image de gauche prend des entrées w*R.

Une fois que les deux nouveaux x sont obtenus, on peut récupérer une disparité sans distorsion, c'est-à-dire la vraie disparité, avec d=$x_l$ - $x_r$, et ensuite appliquer une formule classique de reconstruction en 3D en partant de Z=fB/d. Par exemple avec M(X,Y,Z) le point reconstruit et en restant dans le repère de la paire stéréo, on peut utiliser (d'autres variantes triviales sont possibles par exemple en séparant la distance focale f en $f_u$ et $f_v$) :

$$\begin{vmatrix} X \\ Y \\ Z \end{vmatrix} = \frac{B}{d} \begin{vmatrix} (x_l - u_0) \\ (y_l - v_0) \\ f \end{vmatrix}.$$

Afin de déterminer la disparité minimale, chaque pixel dans la première rangée de l'image est analysé. Pour chaque pixel i, $m_l(i,0)$ est le point correspondant dans l'image de gauche. Si on considère que ce point est l'image d'un point à l'infini, sa contrepartie dans l'image de droite est :

$$m_r = A_r D_r D_l^{-1} A_l^{-1} m_l$$

et d=$m_l$.x-$m_r$.x. Puis, il suffit d'enregistrer la disparité minimum $d_{min}$. On peut ensuite calculer une base d'erreur définit par Erreur=256*($d_{min}$-1). Cette base d'erreur est une convention pour indiquer dans la carte de disparité les points qui n'ont pas pu être mis en correspondance. C'est-à-dire que l'on réserve des valeurs de disparité pour encoder des erreurs potentielles (par exemple pas de texture, ambiguïté...). Le plus simple est de réserver la première valeur de disparité non atteignable (par exemple -1). Dans le cas où la disparité est codée sur deux octet (par exemple en short) il est courant de réserver l'octet de poids fort signaler l'erreur et l'octet de poids faible pour caractériser cette erreur d'où la multiplication par 256. Cette convention est utilisée par exemple dans OpenCV, computer vision with the OpenCV library, www.opencv.org, ISBN 978-0-596-51613-0.

Un système de vision artificielle selon la première ou la seconde variante de la présente invention peut être utilisé dans un véhicule automobile et fait partie d'un système d'aide à la conduite automobile ou coopère avec celui-ci.

La présente invention permet ainsi d'éviter la perte de l'information contenue dans une l'image lors de son traitement et d'optimiser la quantité d'information disponible pour des opérations de traitement et d'analyses ultérieures, tel que la reconnaissance et localisation d'objets dans l'image.

L'optimisation se réfère à la densité de pixel par angle solide. Cette densité est variable pour le capteur d'image initial. Elle est aussi variable sur l'image résultante suite à l'application de la présente invention. Elle est toutefois constante dans les solutions connues de l'état de la technique. Ainsi grâce à la présente invention, elle est plus proche de celle du capteur d'image initial optimisant ainsi la quantité d'information disponible pour des opérations de traitement et d'analyses ultérieures.

La présente invention est aussi relative à un produit programme d'ordinateur pour une unité de traitement telle que l'unité centrale 9. Le produit programme d'ordinateur est enregistré sur un support telle que l'unité de stockage 17 et comprend des portions de code de logiciel lisibles par l'unité de traitement pour exécuter les étapes du procédé décrites ci-dessus pour optimiser la quantité d'information contenue dans une image traitée.

**Revendications**

**1.** Procédé pour optimiser la quantité d'information contenue dans une image traitée, l'image traitée étant fournie pour être utilisée dans un système de vision artificielle, comprenant les étapes de :

- obtenir une image ($I_1$) à partir d'un dispositif d'acquisition d'image (3), l'image ($I_1$) incluant un premier axe de coordonnées (x) et un second axe de coordonnées (y);
- obtenir une image supplémentaire ($I_2$) à partir d'un dispositif d'acquisition d'image supplémentaire (23), l'image supplémentaire ($I_2$) incluant un premier axe de coordonnées (x) et un second axe de coordonnées (y) ;
- supprimer une distorsion dans l'image ($I_1$) ;
- supprimer une distorsion dans l'image supplémentaire ($I_2$) ;

le procédé étant **caractérisé par** les étapes de :

- appliquer une rectification d'image à l'image dans laquelle la distorsion a été supprimée et à l'image supplémentaire dans laquelle la distorsion a été supprimée afin de projeter lesdites images sur un plan commun ;
- appliquer une distorsion d'image à l'image rectifiée uniquement au premier axe de coordonnées (x) ou uniquement au second axe de coordonnées (y) de l'image rectifiée afin de déformer l'image rectifiée suivant ledit axe de coordonnées ; et
- appliquer une distorsion d'image supplémentaire à l'image supplémentaire rectifiée uniquement au premier axe de coordonnées (x) ou uniquement au second axe de coordonnées (y) de l'image supplémentaire rectifiée afin de déformer l'image supplémentaire rectifiée suivant ledit axe de coordonnées ;

où la distorsion d'image appliquée lors de l'étape d'appliquer une distorsion d'image à l'image rectifiée est la distorsion supprimée dans l'image ($I_1$) auparavant lors de l'étape de supprimer une distorsion dans l'image ($I_1$) ou une distorsion sensiblement la même que la distorsion supprimée dans l'image ($I_1$) auparavant lors de l'étape de supprimer une distorsion dans l'image ($I_1$), et la distorsion d'image supplémentaire appliquée lors de l'étape d'appliquer une distorsion d'image supplémentaire à l'image supplémentaire rectifiée est la distorsion supprimée dans l'image supplémentaire ($I_2$) auparavant lors de l'étape de supprimer une distorsion dans l'image supplémentaire ($I_2$) ou une distorsion sensiblement la même que la distorsion supprimée dans l'image supplémentaire ($I_2$) auparavant lors de l'étape de supprimer une distorsion dans l'image supplémentaire ($I_2$).

2. Procédé selon la revendication 1, **caractérisé en ce que** le procédé comprend en outre l'étape d'appliquer, à l'image rectifiée à laquelle une distorsion d'image a été appliquée, une distorsion d'image uniquement à l'autre axe de coordonnées auquel la distorsion d'image n'a pas été appliquée, afin de déformer l'image suivant ledit autre axe de coordonnées, et, en outre, l'étape d'appliquer, à l'image supplémentaire rectifiée à laquelle une distorsion d'image supplémentaire a été appliquée, une distorsion d'image supplémentaire uniquement à l'autre axe de coordonnées auquel la distorsion d'image supplémentaire n'a pas été appliquée, afin de déformer l'image suivant ledit autre axe de coordonnées, où la distorsion d'image appliquée est la distorsion supprimée dans l'image ($I_1$) auparavant lors de l'étape de supprimer une distorsion dans l'image ($I_1$) ou une distorsion sensiblement la même que la distorsion supprimée dans l'image ($I_1$) auparavant lors de l'étape de supprimer une distorsion dans l'image ($I_1$), et la distorsion d'image supplémentaire appliquée est la distorsion supprimée dans l'image supplémentaire ($I_2$) auparavant lors de l'étape de supprimer une distorsion dans l'image supplémentaire ($I_2$) ou une distorsion sensiblement la même que la distorsion supprimée dans l'image supplémentaire ($I_2$) auparavant lors de l'étape de supprimer une distorsion dans l'image supplémentaire ($I_2$).

3. Procédé selon la revendication 1, **caractérisé en ce que** lors de l'étape d'appliquer une distorsion d'image supplémentaire à l'image supplémentaire rectifiée uniquement au premier axe de coordonnées (x) ou uniquement au second axe de coordonnées (y) de l'image supplémentaire rectifiée, la distorsion d'image supplémentaire est appliquée au même axe de coordonnées que celui auquel la distorsion d'image a été appliquée lors de l'étape d'appliquer une distorsion d'image à l'image rectifiée.

4. Procédé selon la revendication 2, **caractérisé en ce que** la distorsion d'image est appliquée à l'image rectifiée uniquement au premier axe de coordonnées (x), et à l'image rectifiée uniquement au second axe de coordonnées (y) ; et la distorsion d'image supplémentaire est appliquée à l'image supplémentaire rectifiée uniquement au premier axe de coordonnées (x) et à l'image supplémentaire rectifiée uniquement au second axe de coordonnées (y) de l'image supplémentaire rectifiée.

5. Procédé selon la revendication 3, **caractérisé en ce que,** lorsque la distorsion d'image supplémentaire est appliquée uniquement au premier axe de coordonnées (x) de l'image supplémentaire rectifiée et lorsque la distorsion d'image est appliquée uniquement au premier axe de coordonnées (x) de l'image rectifiée, la distorsion d'image supplémentaire appliquée à l'image supplémentaire rectifiée est la distorsion supprimée dans l'image supplémentaire ($I_2$) auparavant lors de l'étape de supprimer une distorsion dans l'image supplémentaire ($I_2$), et la distorsion d'image appliquée à l'image rectifiée est la distorsion supprimée dans l'image ($I_1$) auparavant lors de l'étape de supprimer une distorsion dans l'image ($I_1$).

6. Procédé selon la revendication 3, **caractérisé en ce que,** lorsque la distorsion d'image supplémentaire est appliquée uniquement au second axe de coordonnées (y) de l'image supplémentaire rectifiée et la distorsion d'image est appliquée uniquement au second axe de coordonnées (y) de l'image rectifiée, lors de l'étape d'appliquer une distorsion d'image supplémentaire à l'image supplémentaire rectifiée uniquement au premier axe de coordonnées (x) ou uniquement au second axe de coordonnées (y) de l'image supplémentaire rectifiée et lors de l'étape d'appliquer une distorsion d'image à l'image rectifiée uniquement au premier axe de coordonnées (x) ou uniquement au second

**14**

axe de coordonnées (y) de l'image rectifiée respectivement, la distorsion d'image supplémentaire appliquée à l'image supplémentaire rectifiée et la distorsion d'image appliquée à l'image rectifiée sont identiques.

7. Procédé selon la revendication 4, **caractérisé en ce que,** la distorsion d'image supplémentaire appliquée uniquement au second axe de coordonnées (y) de l'image supplémentaire rectifiée et la distorsion d'image appliquée uniquement au second axe de coordonnées (y) de l'image rectifiée sont identiques.

8. Procédé selon la revendication 4 ou 7, **caractérisé en ce que,** la distorsion d'image supplémentaire appliquée uniquement au premier axe de coordonnées (x) de l'image supplémentaire rectifiée et la distorsion d'image appliquée uniquement au premier axe de coordonnées (x) de l'image rectifiée sont respectivement la distorsion supprimée dans l'image supplémentaire ($I_2$) auparavant lors de l'étape de supprimer une distorsion dans l'image supplémentaire ($I_2$) et la distorsion supprimée dans l'image ($I_1$) auparavant lors de l'étape de supprimer une distorsion dans l'image ($I_1$).

9. Procédé selon la revendication 6 ou 7, **caractérisé en ce que**, la distorsion d'image supplémentaire appliquée uniquement au second axe de coordonnées (y) de l'image supplémentaire rectifiée et la distorsion d'image appliquée uniquement au second axe de coordonnées (y) de l'image rectifiée est la distorsion supprimée dans l'image supplémentaire ($I_2$) auparavant lors de l'étape de supprimer une distorsion dans l'image supplémentaire ($I_2$), ou la distorsion supprimée dans l'image ($I_1$) auparavant lors de l'étape de supprimer une distorsion dans l'image ($I_1$), ou un mélange de la distorsion supprimée dans l'image supplémentaire ($I_2$) et de la distorsion supprimée dans l'image ($I_1$).

10. Dispositif (5) pour optimiser la quantité d'information contenue dans une image traitée, le dispositif comprenant :

- une unité d'obtention d'image (11) apte à obtenir une image ($I_1$) à partir d'un dispositif d'acquisition d'image (3), l'image ($I_1$) incluant un premier axe de coordonnées (x) et un second axe de coordonnées (y), l'unité d'obtention d'image (11) étant en outre apte à obtenir une image supplémentaire ($I_2$) à partir d'un dispositif d'acquisition d'image supplémentaire (23), l'image supplémentaire ($I_2$) incluant un premier axe de coordonnées (x) et un second axe de coordonnées (y) ;
- une unité de suppression de distorsion (13) apte à supprimer une distorsion dans l'image ($I_1$) et en outre apte à supprimer une distorsion dans l'image supplémentaire ($I_2$) ;

le dispositif étant **caractérisé en ce qu'**il comprend en outre :

- une unité de rectification (27) apte à appliquer une rectification d'image à l'image dans laquelle la distorsion a été supprimée et à l'image supplémentaire dans laquelle la distorsion a été supprimée afin de projeter lesdites images sur un plan commun ;
- une unité d'application de distorsion (15) configurée pour appliquer une distorsion d'image à l'image rectifiée uniquement au premier axe de coordonnées (x), et configurée pour appliquer une distorsion d'image à l'image rectifiée uniquement au second axe de coordonnées (y) de l'image afin de déformer l'image suivant lesdits axes de coordonnées, et

l'unité d'application de distorsion (15) est en outre configurée pour appliquer une distorsion d'image supplémentaire à l'image supplémentaire rectifiée uniquement au premier axe de coordonnées (x) et configurée pour appliquer une distorsion d'image supplémentaire à l'image supplémentaire rectifiée uniquement au second axe de coordonnées (y) de l'image supplémentaire rectifiée.

11. Système de vision artificielle (21) comprenant un dispositif selon la revendication 10.

12. Système de vision artificielle (21) selon la revendication 11, comprenant en outre un dispositif d'acquisition d'image (3) et un dispositif d'acquisition d'image supplémentaire (23).

13. Véhicule automobile comprenant le système de vision artificielle (21) selon la revendication 11 ou 12.

14. Produit programme d'ordinateur pour une unité de traitement enregistré sur un support et comprenant des portions de code de logiciel lisibles par l'unité de traitement pour exécuter les étapes du procédé selon l'une quelconque des revendications 1 à 9.

**EP 2 590 137 B1**

**Patentansprüche**

1. Verfahren zum Optimieren der Informationsmenge, die in einem verarbeiteten Bild enthalten ist, wobei das verarbeitete Bild geliefert wird, um in einem System zum maschinellen Sehen verwendet zu werden, das die folgenden Schritte umfasst:

   - Erhalten eines Bildes ($I_1$) ausgehend von einer Bilderfassungsvorrichtung (3), wobei das Bild ($I_1$) eine erste Koordinatenachse (x) und eine zweite Koordinatenachse (y) umfasst;
   - Erhalten eines zusätzlichen Bildes ($I_2$) ausgehend von einer zusätzlichen Bilderfassungsvorrichtung (23), wobei das zusätzliche Bild ($I_2$) eine erste Koordinatenachse (x) und eine zweite Koordinatenachse (y) umfasst;
   - Beseitigen einer Verzeichnung in dem Bild ($I_1$) ;
   - Beseitigen einer Verzeichnung in dem zusätzlichen Bild ($I_2$) ;

   wobei das Verfahren durch die folgenden Schritte gekennzeichnet ist:

   - Anwenden einer Bildentzerrung auf das Bild, in dem die Verzeichnung beseitigt wurde, und auf das zusätzliche Bild, in dem die Verzeichnung beseitigt wurde, um die Bilder auf eine gemeinsame Ebene zu projizieren;
   - Anwenden einer Bildverzeichnung auf das entzerrte Bild einzig auf der ersten Koordinatenachse (x) oder einzig auf der zweiten Koordinatenachse (y) des entzerrten Bildes, um das entzerrte Bild entlang der Koordinatenachse zu verformen; und
   - Anwenden einer zusätzlichen Bildverzeichnung auf das entzerrte zusätzliche Bild einzig auf der ersten Koordinatenachse (x) oder einzig auf der zweiten Koordinatenachse (y) des entzerrten zusätzlichen Bildes, um das entzerrte zusätzliche Bild entlang der Koordinatenachse zu verformen;

   wobei die Bildverzeichnung, die während des Schritts des Anwendens einer Bildverzeichnung auf das entzerrte Bild angewandt wird, die Verzeichnung, die zuvor in dem Bild ($I_1$) während des Schritts des Beseitigens einer Verzeichnung in dem Bild ($I_1$) beseitigt wurde, oder eine Verzeichnung ist, die im Wesentlichen dieselbe ist, wie die Verzeichnung, die zuvor in dem Bild ($I_1$) während des Schritts des Beseitigens einer Verzeichnung in dem Bild ($I_1$) beseitigt wurde, und die zusätzliche Bildverzeichnung, die während des Schritts des Anwendens einer zusätzlichen Bildverzeichnung auf das entzerrte zusätzliche Bild angewendet wird, die Verzeichnung ist, die zuvor in dem zusätzlichen Bild ($I_2$) während des Schritts des Beseitigens einer Verzeichnung in dem zusätzlichen Bild ($I_2$) beseitigt wurde, oder eine Verzeichnung ist, die im Wesentlichen dieselbe ist wie die zuvor in dem zusätzlichen Bild ($I_2$) während des Schritts des Beseitigens einer Verzeichnung in dem zusätzlichen Bild ($I_2$) beseitigte Verzeichnung.

2. Verfahren nach Anspruch 1, **dadurch gekennzeichnet, dass** das Verfahren ferner den Schritt des Anwendens einer Bildverzeichnung auf das entzerrte Bild, auf das eine Bildverzeichnung angewandt wurde, einzig auf der anderen Koordinatenachse, auf die die Bildverzeichnung nicht angewandt wurde, um das Bild entlang der anderen Koordinatenachse zu verformen, und ferner den Schritt des Anwendens einer zusätzlichen Bildverzeichnung auf das entzerrte zusätzliche Bild, auf das eine zusätzliche Bildverzeichnung angewandt wurde, einzig auf die andere Koordinatenachse, auf die die zusätzliche Bildverzeichnung nicht angewandt wurde, um das Bild entlang der anderen Koordinatenachse zu verformen, umfasst, wobei die angewandte Bildverzeichnung die Verzeichnung, die zuvor in dem Bild ($I_1$) während des Schritts des Beseitigens einer Verzeichnung in dem Bild ($I_1$) beseitigt wurde, oder eine Verzeichnung ist, die im Wesentlichen dieselbe wie die Verzeichnung ist, die zuvor in dem Bild ($I_1$) während des Schritts des Beseitigens einer Verzeichnung in dem Bild ($I_1$) beseitigt wurde, und die zusätzliche angewandte Bildverzeichnung die Verzeichnung, die zuvor in dem zusätzlichen Bild ($I_2$) während des Schritts des Beseitigens einer Verzeichnung in dem zusätzlichen Bild ($I_2$) beseitigt wurde, oder eine Verzeichnung ist, die im Wesentlichen dieselbe ist wie die zuvor in dem zusätzlichen Bild ($I_2$) während des Schritts des Beseitigens einer Verzeichnung in dem zusätzlichen Bild ($I_2$) beseitigte Verzeichnung.

3. Verfahren nach Anspruch 1, **dadurch gekennzeichnet, dass** während des Schritts des Anwendens einer zusätzlichen Bildverzeichnung auf das entzerrte zusätzliche Bild einzig auf die erste Koordinatenachse (x) oder einzig auf die zweite Koordinatenachse (y) des entzerrten zusätzlichen Bildes, die zusätzliche Bildverzeichnung auf dieselbe Koordinatenachse angewandt wird, wie die, auf die die Bildverzeichnung während des Schritts des Anwendens einer Bildverzeichnung auf das entzerrte Bild angewandt wurde.

4. Verfahren nach Anspruch 2, **dadurch gekennzeichnet, dass** die Bildverzeichnung auf das entzerrte Bild einzig auf die erste Koordinatenachse (x) und auf das entzerrte Bild einzig auf die zweite Koordinatenachse (y) angewandt wird; und die zusätzliche Bildverzeichnung auf das entzerrte zusätzliche Bild einzig auf die erste Koordinatenachse (x) und auf das entzerrte zusätzliche Bild einzig auf die zweite Koordinatenachse (y) des entzerrten zusätzlichen Bildes angewandt wird.

5. Verfahren nach Anspruch 3, **dadurch gekennzeichnet, dass**, wenn die zusätzliche Bildverzeichnung einzig auf die erste Koordinatenachse (x) des entzerrten zusätzlichen Bildes angewandt wird, und, wenn die Bildverzeichnung einzig auf die erste Koordinatenachse (x) des entzerrten Bildes angewandt wird, die zusätzliche Bildverzeichnung, die auf das entzerrte zusätzliche Bild angewandt wird, die zuvor in dem zusätzlichen Bild ($I_2$) während des Schritts des Beseitigens einer Verzeichnung in dem zusätzlichen Bild ($I_2$) beseitigte Verzeichnung ist und die auf das entzerrte Bild angewandte Verzeichnung die zuvor in dem Bild ($I_1$) während des Schritts des Beseitigens einer Verzeichnung in dem Bild ($I_1$) beseitigte Verzeichnung ist.

6. Verfahren nach Anspruch 3, **dadurch gekennzeichnet, dass**, wenn während des Schritts des Anwendens einer zusätzlichen Bildverzeichnung auf das entzerrte zusätzliche Bild einzig auf die erste Koordinatenachse (x) oder einzig auf die zweite Koordinatenachse (y) des entzerrten zusätzlichen Bildes und während des Schritts des Anwendens einer Bildverzeichnung auf das entzerrte Bild einzig auf die erste Koordinatenachse (x) beziehungsweise einzig auf die zweite Koordinatenachse (y) des entzerrten Bildes, die zusätzliche Bildverzeichnung einzig auf die zweite Koordinatenachse (y) des entzerrten zusätzlichen Bildes angewandt wird und die Bildverzeichnung einzig auf die zweite Koordinatenachse (y) des entzerrten Bildes angewandt wird, die zusätzliche Bildverzeichnung, die auf das entzerrte zusätzliche Bild angewandt wird und die Bildverzeichnung, die auf das entzerrte Bild angewandt wird, identisch sind.

7. Verfahren nach Anspruch 4, **dadurch gekennzeichnet, dass** die zusätzliche Bildverzeichnung, die einzig auf die zweite Koordinatenachse (y) des entzerrten zusätzlichen Bildes angewandt wird, und die Bildverzeichnung, die einzig auf die zweite Koordinatenachse (y) des entzerrten Bildes angewandt wird, identisch sind.

8. Verfahren nach Anspruch 4 oder 7, **dadurch gekennzeichnet, dass** die zusätzliche Bildverzeichnung, die einzig auf die erste Koordinatenachse (x) des entzerrten zusätzlichen Bildes angewandt wird, und die Bildverzeichnung, die einzig auf die erste Koordinatenachse (x) des entzerrten Bildes angewandt wird, die zuvor in dem zusätzlichen Bild ($I_2$) während des Schritts des Beseitigens einer Verzeichnung in dem zusätzlichen Bild ($I_2$) beseitigte Verzeichnung beziehungsweise die Verzeichnung sind, die zuvor in dem Bild ($I_1$) während des Schritts des Beseitigens einer Verzeichnung in dem Bild ($I_1$) beseitigt wurde.

9. Verfahren nach Anspruch 6 oder 7, **dadurch gekennzeichnet, dass** die zusätzliche Bildverzeichnung, die einzig auf die zweite Koordinatenachse (y) des entzerrten zusätzlichen Bildes angewandt wird, und die Bildverzeichnung, die einzig auf die zweite Koordinatenachse (y) des entzerrten Bildes angewandt wird, die Verzeichnung, die zuvor in dem zusätzlichen Bild ($I_2$) während des Schritts des Beseitigens einer Verzeichnung in dem zusätzlichen Bild ($I_2$) beseitigt wurde, oder die Verzeichnung, die zuvor in dem Bild ($I_1$) während des Schritts des Beseitigens einer Verzeichnung in dem Bild ($I_1$) beseitigt wurde, oder eine Mischung der Verzeichnung, die in dem zusätzlichen Bild ($I_2$) beseitigt wurde, und der in dem Bild ($I_1$) beseitigten Verzeichnung ist.

10. Vorrichtung (5) zum Optimieren der Informationsmenge, die in einem bearbeiteten Bild enthalten ist, wobei die Vorrichtung Folgendes umfasst:

- eine Bilderhalteeinheit (11), die geeignet ist, ein Bild ($I_1$) ausgehend von einer Bilderfassungsvorrichtung (3) zu erhalten, wobei das Bild ($I_1$) eine erste Koordinatenachse (x) und eine zweite Koordinatenachse (y) umfasst, wobei die Bilderhalteeinheit (11) ferner geeignet ist, ein zusätzliches Bild ($I_2$) ausgehend von einer zusätzlichen Bilderfassungsvorrichtung (23) zu erhalten, wobei das zusätzliche Bild ($I_2$) eine erste Koordinatenachse (x) und eine zweite Koordinatenachse (y) umfasst;
- eine Verzeichnungsbeseitigungseinheit (13), die geeignet ist, eine Verzeichnung in dem Bild ($I_1$) zu beseitigen, und ferner geeignet ist, eine Verzeichnung in dem zusätzlichen Bild ($I_2$) zu beseitigen;

wobei die Vorrichtung **dadurch gekennzeichnet ist, dass** sie ferner Folgendes umfasst:

- eine Entzerrungseinheit (27), die geeignet ist, eine Bildentzerrung auf das Bild, in dem die Verzeichnung beseitigt wurde, und auf das zusätzliche Bild, in dem die Verzeichnung beseitigt wurde, anzuwenden, um die Bilder auf eine gemeinsame Ebene zu projizieren;
- eine Verzeichnungsanwendungseinheit (15), die konfiguriert ist, um eine Bildverzeichnung auf das entzerrte Bild einzig auf der ersten Koordinatenachse (x) anzuwenden, und konfiguriert ist, um eine Bildverzeichnung auf das entzerrte Bild einzig auf der zweiten Koordinatenachse (y) des Bildes anzuwenden, um das Bild entlang der Koordinatenachsen zu verformen, und

wobei die Verzeichnungsanwendungseinheit (15) ferner konfiguriert ist, um eine zusätzliche Bildverzeichnung auf das zusätzliche entzerrte Bild einzig auf der ersten Koordinatenachse (x) anzuwenden, und konfiguriert ist, um eine zusätzliche Bildverzeichnung auf das entzerrte zusätzliche Bild einzig auf der zweiten Koordinatenachse (y) des entzerrten zusätzlichen Bildes anzuwenden.

11. System (21) zum maschinellen Sehen, das eine Vorrichtung nach Anspruch 10 umfasst.

12. System (21) zum maschinellen Sehen nach Anspruch 11, das ferner eine Bilderfassungsvorrichtung (3) und eine zusätzliche Bilderfassungsvorrichtung (23) umfasst.

13. Kraftfahrzeug, das das System (21) zum maschinellen Sehen nach Anspruch 11 oder 12 umfasst.

14. Computerprogrammprodukt für eine Verarbeitungseinheit, das auf einem Träger aufgezeichnet ist und Softwarecodeabschnitte umfasst, die von der Verarbeitungseinheit gelesen werden können, um die Schritte des Verfahrens nach einem der Ansprüche 1 bis 9 auszuführen.

**Claims**

1. A method for optimizing the amount of information contained in a processed image, the processed image being provided so as to be used in an artificial vision system, comprising the steps of:

- obtaining an image ($I_1$) from an image acquisition device (3), the image ($I_1$) including a first coordinate axis (x) and a second coordinate axis (y);
- obtaining an additional image ($I_2$) from an additional image acquisition device (23), the additional image ($I_2$) including a first coordinate axis (x) and a second coordinate axis (y);
- suppressing a distortion in the image ($I_1$) ;
- suppressing a distortion in the additional image ($I_2$) ;

the method being **characterized by** the steps of:

- applying an image rectification to the image in which distortion was suppressed and to the additional image in which distortion was suppressed in order to project said images on a common plane;
- applying an image distortion to the rectified image only to the first coordinate axis (x) or only to the second coordinate axis (y) of the rectified image in order to deform the rectified image along said coordinate axis; and
- applying an additional image distortion to the rectified additional image only to the first coordinate axis (x) or only to the second coordinate axis (y) of the additional rectified image in order to deform the additional rectified image along said coordinate axis;

wherein the image distortion applied during the step for applying an image distortion to the rectified image is the distortion suppressed in the image ($I_1$) beforehand during the step for suppressing a distortion in the image ($I_1$), or a distortion substantially the same as the distortion suppressed in the image ($I_1$) beforehand during the step for suppressing a distortion in the image ($I_1$), and the additional image distortion applied during the step for applying an additional image distortion to the rectified additional image is the distortion suppressed in the additional image ($I_2$) beforehand during the step for suppressing a distortion in the additional image ($I_2$) or a distortion substantially the same as the distortion suppressed in the additional image ($I_2$) beforehand during the step for suppressing a distortion in the additional image ($I_2$) .

2. The method according to claim 1, **characterized in that** the method further comprises the step for applying to the rectified image to which an image distortion was applied, an image distortion only to the other coordinate axis to which the image distortion was not applied, in order to deform the image along said other coordinate axis, and further the step for applying to the additional rectified image to which an additional image distortion was applied, and additional image distortion only to the other coordinate axis to which the additional image distortion was not applied, in order to deform the image along said other coordinate axis, wherein the applied image distortion is the distortion suppressed in the image ($I_1$) beforehand during the step for suppressing a distortion in the image ($I_1$) or a distortion

substantially the same as the distortion suppressed in the image ($I_1$) beforehand during the step for suppressing a distortion in the image ($I_1$), and the applied additional image distortion is the distortion suppressed in the additional image ($I_2$) beforehand during the step for suppressing a distortion in the additional image ($I_2$) or a distortion substantially the same as the suppressed distortion in the additional image ($I_2$) beforehand during the step for suppressing a distortion in the additional image ($I_2$).

3. The method according to claim 1, **characterized in that** during the step for applying an additional image distortion to the rectified additional image only to the first coordinate axis (x) or only to the second coordinate axis (y) of the rectified additional image, the additional image distortion is applied to the same coordinate axis as the one into which the image distortion was applied during the step for applying an image distortion to the rectified image.

4. The method according to claim 2, **characterized in that** the image distortion is applied to the rectified image only to the first coordinate axis (x), and to the rectified image only to the second coordinate axis (y); and the additional image distortion is applied to the rectified additional image only to the first coordinate axis (x) and to the rectified additional image only to the second coordinate axis (y) of the rectified additional image.

5. The method according to claim 3, **characterized in that**, when the additional image distortion is applied only to the first coordinate axis (x) of the rectified additional image and when the image distortion is applied only to the first coordinate axis (x) of the rectified image, the additional image distortion applied to the rectified additional image is the distortion suppressed in the additional image ($I_2$) beforehand during the step for suppressing a distortion in the additional image ($I_2$) and the image distortion applied to the rectified image is the distortion suppressed in the image ($I_1$) beforehand during the step for suppressing a distortion in the image ($I_1$).

6. The method according to claim 3, **characterized in that**, when the additional image distortion is applied only to the second coordinate axis (y) of the rectified additional image and the image distortion is applied only to the second coordinate axis (y) of the rectified image, during the step for applying an additional image distortion to the rectified additional image only to the first coordinate axis (x) or only to the second coordinate axis (y) of the rectified additional image and during the step for applying an image distortion to the rectified image only to the first coordinate axis (x) or only to the second coordinate axis (y) of the rectified image respectively, the additional image distortion applied to the rectified additional image and the image distortion applied to the rectified image are identical.

7. The method according to claim 4, **characterized in that**, the additional image distortion applied only to the second coordinate axis (y) of the rectified additional image and the image distortion applied only to the second coordinate axis (y) of the rectified image are identical.

8. The method according to claim 4 or 7, **characterized in that**, the additional image distortion applied only to the first coordinate axis (x) of the rectified additional image and the image distortion applied only to the first coordinate axis (x) of the rectified image respectively are the distortion suppressed in the additional image ($I_2$) beforehand during the step for suppressing a distortion in the additional image ($I_2$), and the distortion suppressed in the image ($I_1$) beforehand during the step for suppressing a distortion in the image ($I_1$).

9. The method according to claim 6 or 7, **characterized in that**, the additional image distortion applied only to the second coordinate axis (y) of the rectified additional image and the image distortion applied only to the second coordinate axis (y) of the rectified image is the distortion suppressed in the additional image ($I_2$) beforehand or during the step for suppressing a distortion in the additional image ($I_2$), or the distortions suppressed in the image ($I_1$) beforehand during the step for suppressing a distortion in the image ($I_1$), or a mixture of the distortion suppressed in the additional image ($I_2$) and of the distortion suppressed in the image ($I_1$).

10. A device (5) for optimizing the amount of information contained in a processed image, the device comprising:

- a unit (11) for obtaining an image, capable of obtaining an image ($I_1$) from an image acquisition device (3), the image ($I_1$) including a first coordinate axis (x) and a second coordinate axis (y), the unit (11) for obtaining an image further being capable of obtaining an additional image ($I_2$) from an additional image acquisition device (23), the additional image ($I_2$) including a first coordinate axis (x) and a second coordinate axis (y);
- a distortion suppression unit (13) capable of suppressing a distortion in the image ($I_1$) and further capable of suppressing a distortion in the additional image ($I_2$) ;

the device being **characterized in that** it further comprises:

- a rectification unit (27) capable of applying an image rectification to the image in which the distortion was suppressed and to the additional image in which the distortion was suppressed in order to project said images on a common plane;
- a unit (15) for applying distortion configured so as to apply an image distortion to the rectified image only to the first coordinate axis (x), and configured so as to apply an image distortion to the rectified image only to this second coordinate axis (y) of the image in order to deform the image along said coordinate axes, and

the unit (15) for applying distortion is further configured so as to apply an additional image distortion to the rectified additional image only to the first coordinate axis (x) and configured so as to apply an additional image distortion to the rectified additional image only to the second coordinate axis (y) of the rectified additional image.

11. An artificial vision system (21) comprising a device according to claim 10.

12. The artificial vision system (21) according to claim 11, further comprising an image acquisition device (3) and an additional image acquisition device (23).

13. An automobile vehicle comprising the artificial vision system (21) according to claim 11 or 12.

14. A computer program product for a processing unit, recorded on a medium and comprising software code portions, legible by the processing unit for executing the steps of the method according to any of claims 1 to 9.

FIG. 1

FIG. 2

FIG. 3

FIG. 4

FIG. 5

FIG. 6

FIG. 7

FIG. 8

FIG.9

FIG.10

FIG. 11

FIG. 12

FIG. 13

**EP 2 590 137 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100091090 A
- JP 2007068468 W
- US 20100208034 A
- US 20100119172 A
- US 6608923 B
- EP 2068280 A
- EP 2381673 A

**Littérature non-brevet citée dans la description**

- **LEE H.S. et al.** Implémentation of 3D undistorting algorithm for stereo camera. *IEEE International Workshop on Intelligent Data Acquisition and Advanced Computing Systems: Technology and Applications,* 21 Septembre 2009
- **R. HARTLEY ; A. ZISSERMAN.** *Multiple View Geometry,* 191
- Vision stéréoscopique et propriétés différentielles des surfaces. *Three Dimensional Computer Vision,* 1997, ISBN 978-0-596-51613-0, 430